# EUROPEAN PATENT APPLICATION

(11) **EP 3 285 236 A1**
(43) Date of publication of application: **21.02.2018**
(21) Application number: 16780335.2
(22) Date of filing: 18.04.2016
(51) Int. Cl.: G08B 5/22, G08B 7/06, G08B 21/18, G09G 3/00

(54) **ELECTRONIC DEVICE FOR PROVIDING NOTIFICATION INFORMATION, AND NOTIFICATION INFORMATION PROVISION METHOD THEREFOR**

(30) Priority: 16.04.2015 US 201562148383 P; 18.06.2015 KR 20150086853; 15.04.2016 KR 20160046436
(71) Applicant: Samsung Electronics Co., Ltd., Gyeonggi-do 16677 (KR)
(72) Inventor: AGARWAL, Pankaj, Suwon-si Gyeonggi-do 16704 (KR); KIM, Chang-yeong, Seoul 06215 (KR); JUNG, Ji-su, Yongin-si Gyeonggi-do 16951 (KR)
(74) Representative: HGF Limited
(86) International application number: PCT/KR2016/003972
(87) International publication number: WO 2016/167612

(57) **Abstract**

Provided are an electronic device for providing notice information, and a notice information provision method therefor. The electronic device for providing notice information according to the present disclosure comprises: a display unit divided into a plurality of areas respectively corresponding to a plurality of items of notice information; and a control unit for controlling the display unit so that when an event related to notice information is detected, pixels included in an area corresponding to the notice information, from among the plurality of areas, are activated, and pixels included in areas not corresponding to the notice information are deactivated.

## Description

### Field of the Invention

Devices and methods consistent with what is disclosed herein relate to an electronic device providing notice information and a method for providing the notice information thereof, and more specifically, to an electronic device providing various types of notice information on a screen and a method for providing notice information thereof.

### Description of the Related Art

Development in the mobile communication technology enables provision of various types of electronic device such as smart phones, wearable devices or tablet PCs, which may provide information to a user through various outputting methods.

For example, an electronic device may provide notice information indicating the status of the electronic device and the notice information received by the communication system, through a display or a speaker.

The notice information may include various types of information such as phone reception information, message reception information, or alarm information set by a user.

Herein, various additional information may be included in the notice information. For example, the message reception information may include sender identification information regarding a counterpart who sends a message, and content of the message. Further, the notice information may include the alarm time and user schedules related with the alarm. Further, the phone reception information may include caller identification of a counterpart who is making a phone call.

### Detailed description

### Technical problem

When an electronic device provides notice information, specific notice information may include private information of a user. For example, message reception information may include the private message descriptions of a user. In this case, when a user is adjacent to a third party, the private descriptions of a user may be exposed to the third party.

Further, due to the diverse nature of types of the notice information, the electronic device may receive the notice information indiscriminately. When a user is working on his job, indiscriminate reception of the notice information may deteriorate the concentration on the work.

Thus, according to an embodiment, a technical objective is to minimize the exposure of the notice information and also to selectively provide the notice information, when providing the notice information to a user.

### Means for solving problem

According to an embodiment, an electronic device configured to provide notice information is provided, which may include a display divided into a plurality of areas respectively corresponding to a plurality of notice information, and a controller configured to control the display to activate pixels included in an area corresponding to the notice information among the plurality of areas, and inactivate pixels include in an area not corresponding to the notice information, when the event related with the notice information is sensed.

The area corresponding to the notice information may be an area corresponding to a group to which the notice information belong.

The display may be divided into a plurality of areas corresponding to a plurality of groups to which the plurality of notice information respectively belong.

The notice information may belong to one group among a plurality of groups according to types of the notice information, and the types of the notice information may be determined according to at least one among an application for processing the notice information, an importance of the notice information, a size of the notice information, a sender of the notice information, descriptions of the notice information, and a data type of the notice information.

The electronic device may additionally include a memory configured to retain mapping information in which the plurality of areas are respectively mapped with the plurality of groups to which the plurality of notice information belong, and the controller may control the display to activate pixels included in the area to which the notice information belong, among the plurality of areas, based on the mapping information.

The notice information may be at least one among call reception information, text message information, e-mail message information, instant message information, social service information, alarm information, timer information, battery information and schedule information.

The controller may control the display to display group notice information of a group to which the notice information belongs, on the area where the pixels are activated.

The group notice information may include at least one among a graphic representing the group, a number of the notice information belonging to the group, a number of the notice information un-read by a user and belong to the group, a name of the group, an initial of the group, a nickname of the group, an image related with the group, and an animation related with the group.

The electronic device may additionally include a sensor configured to sense a user input of selecting the group notice information, and the controller may control the display to display the notice information belonging to the group in response to the user input.

The electronic device may additionally include a sensor configured to sense a user input of selecting the group notice information, and the controller may control the display to display a notice information list belonging to the group in response to the user input.

In an embodiment, a method for providing notice information of an electronic device is provided, which may include sensing an event related with notice information, and activating pixels included in an area corresponding to the notice information among a plurality of areas divided from a display to respectively correspond to a plurality of notice information, and inactivating pixels included in an area not corresponding to the notice information in response to the sensed event.

The area corresponding to the notice information may be an area corresponding to a group to which the notice information belongs.

The display may be divided into a plurality of areas corresponding to a plurality of groups to which a plurality of notice information respectively belong.

The notice information may belong to one group among a plurality of groups according to types of the notice information, and the types of the notice information may be determined according to at least one among an application for processing the notice information, an importance of the notice information, a size of the notice information, a sender of the notice information, descriptions of the notice information, and a data type of the notice information.

The method may additionally include retaining mapping information in which the plurality of areas are respectively mapped with a plurality of groups to which the plurality of notice information respectively belong, on a memory, and the activating the pixels included in the area corresponding to the notice information may include activating pixels included in an area to which the notice information belong, among the plurality of areas, based on the mapping information.

The notice information may be at least one among call reception information, text message information, e-mail message information, instant message information, social service information, alarm information, timer information, battery information and schedule information.

The notice information providing method may additionally include displaying group notice information of a group to which the notice information belongs, on the area where the pixels are activated.

The group notice information may include at least one among a graphic representing the group, a number of the notice information belonging to the group, a number of the notice information un-read by a user and belonging to the group, a name of the group, an initial of the group, a nickname of the group, an image related with the group, and an animation related with the group.

The notice information providing method may additionally include sensing a user input of selecting the group notice information, and displaying the notice information belonging to the group in response to the user input.

The notice information providing method may additionally include sensing a user input of selecting the group notice information, and displaying a notice information list belonging to the group in response to the user input.

According to another embodiment, a computer readable recording medium may store a program to perform sensing the event related with notice information, and activating pixels included in the area corresponding to the notice information among a plurality of areas on a display which are divided by respectively corresponding to a plurality of notice information while inactivating pixels included in the area not corresponding to the notice information in response to the sensed event.

### Effect of the Invention

According to the various embodiments, the electronic device may provide the notice information so as to minimize the exposure of the user private information. For example, when the notice information is received while a user is having a meeting with several persons, the group notice information of a group to which the notice information belong, may be displayed. Thus, a user can confirm the types of the notice information while minimizing the exposure of the information to the surrounded persons.

Further, according to the above embodiments, when the event related with the notice information is sensed, pixels included in the area corresponding to the group to which the notice information belong, may be activated and pixels included in the area corresponding to the other groups may be inactivated. Therefore, because only the electrical power to activate the parted pixels of the display is consumed, the using time of the battery in the electronic device can increase.

Other effects that may be obtained or anticipated from the example embodiments of the present disclosure will be directly or implicitly set forth in the detailed description of the example embodiments of the present disclosure. That is, various effects that are anticipated according to the example embodiments of the present disclosure will be set forth in the detailed description which will be set forth later.

### Brief Description of the Drawings

FIG. 1 is a diagram illustrating notice information being provided to an electronic device according to an embodiment.
FIG. 2A is a block diagram of the electronic device according to an embodiment.
FIG. 2B is a brief block diagram of an electronic device according to another embodiment.
FIG. 3 is a diagram provided to explain a structure of software stored in an electronic device according to an embodiment.
FIG. 4 is a diagram illustrating mapping information according to an embodiment.
FIGS. 5A to 5C are diagrams illustrating examples of group notice information according to an embodiment.
FIGS. 6 to 10B are diagrams illustrating a screen of a user interface configured to display the notice information according to an embodiment.
FIGS. 11A and 11B are diagrams illustrating a user interface screen to establish groups to which the notice information belong, according to an embodiment.
FIGS. 13A and 13B are diagrams illustrating a user interface screen with partially activated touch screen according to an embodiment.
FIGS. 14A to 14E are diagrams illustrating a user interface screen to register the schedule through watch screen according to an embodiment.
FIGS. 15A and 15B are diagrams illustrating the user interface screen to cancel schedule registration through a watch screen according to an embodiment.
FIGS. 16A and 16B are diagrams illustrating various devices displaying notice information according to an embodiment.
FIGS. 17 to 19 are flowcharts provided to explain a method for displaying the notice information according to an embodiment.
FIG. 21 is a diagram illustrating situation in which notice information is provided through an external electronic device according to another embodiment.
FIGS. 22 and 23 are a diagram and a sequence diagram, each provided to explain an example in which mapping information are registered by a server and provided to an external device according to another embodiment.
FIG. 24 is a diagram illustrating an example in which a screen is divided according to a number of the group notice information.
FIG. 25 is a diagram illustrating situation in which notice information is provided to an electronic device according to another embodiment.
FIG. 26 is a diagram illustrating a process of mapping a sender that sends notice information to an area of a display according to an embodiment.
FIG. 27 is a diagram illustrating situation in which notice information is provided to an electronic device according to yet another embodiment.
FIG. 28 is a diagram illustrating a process of mapping a recipient that receives notice information in an area of a display according to an embodiment.

### Detailed description of exemplary embodiments

Certain exemplary embodiments of the present inventive concept will now be described in greater detail with reference to the accompanying drawings.

While the terms that are currently widely used are selected herein in consideration of the functions of the present disclosure, these may vary depending on the intent of a skilled artisan in the corresponding technical field or precedent, or appearance of new technology. Further, in certain cases, certain terms may be arbitrarily selected by an applicant, in which case the definition will be set forth in detail in the detailed description part of the disclosure. Accordingly, the terms used herein will have to be defined based on the meaning of the terms, and also the entire context of the present disclosure.

The embodiments of the present disclosure may have a variety of modifications. Among a variety of embodiments, certain embodiments will be exemplified in the drawings and described in detail. However, this should not be construed as limiting the scope of the certain embodiments, and rather understood as encompassing any variation, equivalents or replacements that may fall under the concept and technical scope as described herein. In describing the embodiments, certain known technologies may not be described in detail, as it may obscure understanding on the subject matter of the present disclosure.

The terms such as "first" or "second" may be used to explain various elements, but the elements should not be limited thereto. The terms are used only for the purpose of distinguishing one element from the other.

A singular expression includes a plural expression, unless otherwise specifically defined. The terms such as "comprise" or "consist of" as used herein are intended to designate presence of characteristic, number, step, operation, element, component described herein or a combination thereof, and should not be understood as foreclosing presence or possibility of adding one or more other characteristics, numbers, steps, operations, elements, components or combinations thereof.

In the exemplary embodiments, the "module" or "unit" may be implemented as hardware or software or a combination of hardware and software, which may perform at least one or more operations. Further, a plurality of "modules" or a plurality of "units" may be integrated into at least one processor (not illustrated) except for the "module" or the "portion" which have to be implemented as specific hardware.

In the following description, when a certain portion is "connected" to another portion, this includes not only the instance of being "directly connected", but also the instance of being "electrically connected" with the intervention of another device in between. Further, when a certain portion "comprises" a certain element, unless specified to the contrary, this means that additional element may be included, rather than foreclosing other element.

In the following description, same drawing reference numerals are used for the same elements even in different drawings. The matters defined in the description, such as detailed construction and elements, are provided to assist in a comprehensive understanding of the present inventive concept can be carried out without those specifically defined matters. Also, well-known functions or constructions are not described in detail since they would obscure the invention with unnecessary detail.

Further, according to an embodiment, a user input may include at least one among touch input, bending input, voice input, button input, motion input and multimodal input, but not limited thereto.

Further, according to an embodiment, the "touch input" may include a touch gesture performed by a user on a display and a cover to control a device. Further, the "touch input" may include touches not in contact with the display, i.e., touches spaced away by more than a certain distance (e.g., floating or hovering). The touch input may be touch & hold gesture, tap gesture to discontinue after the touch, double tap gesture, panning gesture, flick gesture, touch-drag gesture to move toward one direction after touch, or pinch gesture, but not limited thereto.

Further, according to an embodiment, the "button input" may refer to an input made by a user to control the device by using a physical button attached on the device.

Further, according to an embodiment, the "motion input" may refer to a motion performed by a user on the device to control the device. For example, the motion input may include the user rotating the device, tilting the device, or moving the device upward, downward, leftward and rightward.

Further, according to an embodiment, the "multimodal input" may refer to a combination of two or more manners of inputs. For example, the device may receive a touch input and a motion input together from a user, or receive a touch input and a voice input together from a user.

Further, according to an embodiment, an "application" may refer to a group of computer programs designed to perform specific functions. Various applications may be provided in the embodiments of the present disclosure. For example, there may be game application, video play application, map application, memo application, schedule application, phone book application, broadcasting application, exercise support application, payment application, photo folder application, medical device control application, or user interface providing application for a plurality of medical devices, but not limited thereto.

Further, according to an embodiment, the "application identification information" may refer to unique information to distinguish an application from another application. For example, the application identification information may be icon, index item, or link information, but not limited thereto.

Further, according to an embodiment, a user interaction (UI) element may refer to an element that can perform interaction with a user, thus providing visual, auditory or olfactory feedbacks in response to a user input.

Further, according to an embodiment, the "notice information" may include information received at the electronic device from an external device, information indicating status of the electronic device, or information previously registered by a user

For example, the information received at the electronic device from an external device may be phone reception information, text message information (e.g., SMS and MMS message, etc.), e-mail message information or instant message (e.g., Kakao message, Whatsapp message, etc.). Further, the above-mentioned information may be social service information indicating that twits, comments, contents are registered, deleted, or edited on a social server (e.g., facebook, twitter, or linkedin).

For another example, the information indicating status of the electronic device may be battery information of the electronic device 10 or communication information of the electronic device.

For another example, the information previously registered by a user may be alarm information, timer information or schedule information.

Further, according to an embodiment, the "notice information" may refer to information inclusive of all of the notice reception information informing the arrival of the notice information, descriptions of the notice information, and identification information of the notice information. For example, when the notice information is message information, the notice information may include at least one among the message reception information informing the arrival of a message, the message identification information (e.g., message sender information or message sending server information) and message descriptions (e.g., message title, message main body, message attachment file title, or message attachment file descriptions).

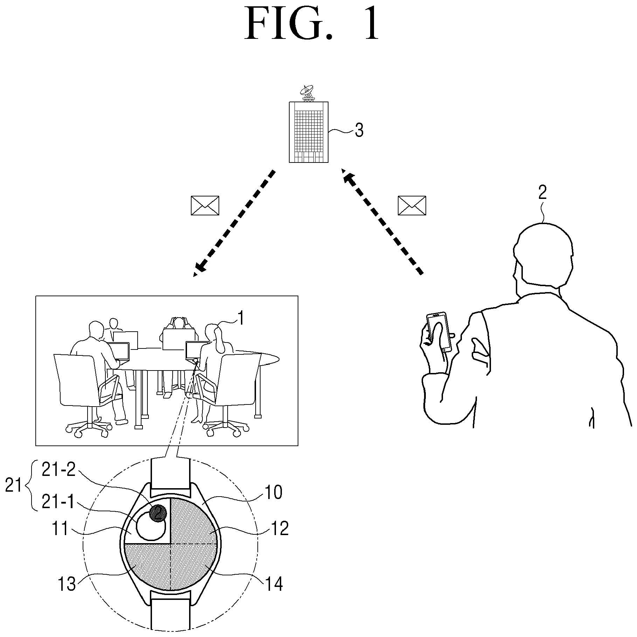

FIG. 1 is a diagram illustrating situation in which the notice information is provided to the electronic device 10 according to an embodiment.

Referring to FIG. 1, the electronic device 10 may be implemented as devices for various purposes. For example, the electronic device 10 according to an embodiment may include a mobile phone, a smart phone, a laptop computer, a tablet device, an electronic book device, a digital broadcasting device, personal digital assistants (PDA), a portable multimedia player (PMP), a navigation or a wearable device such as smart watch, smart glasses, or head-mounted display (HMD). For the convenient explanation, the operation of the electronic device 10 according to an embodiment may be described based on the smart watch.

In addition, the electronic device 10 may include various forms of electronic device, such as an image forming device such as a printer, home appliances (e.g., refrigerator, air conditioner, cleaner, oven, microwave, washing machine or air purifier), medical devices (e.g., medical imaging device or medical measurement device (blood glucose monitoring device, heart rate monitor, blood sugar measuring device, or body temperature measuring device), vehicle infotainment device, a marine electronic device (e.g., marine navigation device, gyro compass, or the like), avionics, security device, vehicle head unit, robots for industrial and household purposes, drone, ATM at financial institutions, point of sales (POS) at stores, or Internet-of-Things (IoT) devices (e.g., lightbulb, various sensors, sprinkler devices, fire alarm, temperature controller, street light, toaster, exercise equipment, hot water tank, heater, boiler, or the like).

Referring to FIG. 1, a user 1 is holding a meeting with third parties. In this situation, a counterpart 2 of the user 1 may send a message to the user 1. The message may be transmitted through a station 3 to the user. In this case, the electronic device 10 of the user 1 may sense an event informing the arrival of the message. In response to the sensed event, the electronic device 10 may determine an area corresponding to a group to which the message belongs among a plurality of areas on a display 130. Further, the electronic device 10 may activate pixels included in the determined area, and display group notice information 21 of the group to which the message belongs on the determined area in order to display the arrival of the message.

Referring to FIG. 1, the group notice information 21 may include at least one among a graphic 21-1 representing the group and a number of the notice information belonging to the group 21-2 (e.g., a number of messages not read by a user). Herein, as illustrated in FIG. 1, the group notice information 21 may include both the graphic 21-1 representing the group and a number of the notice information belonging to the group 21-2, although this is merely one of embodiments. Accordingly, the group notice information 21 may include only one among the graphic 21-1 representing the group and a number of the notice information belonging to the group 21-2. The graphic representing the group 21-1 may have different colors, shapes or images per type of the group, for example. The graphic representing the group 21-2 may be displayed on the area corresponding to the group when there is notice information belonging to the group.

Accordingly, since the group notice information is displayed on the activated pixel area, the user 1 can be provided with messages with minimized exposure of the private information during meeting with the third parties. When the user selects the group notice information, the user may be provided with the notice information.

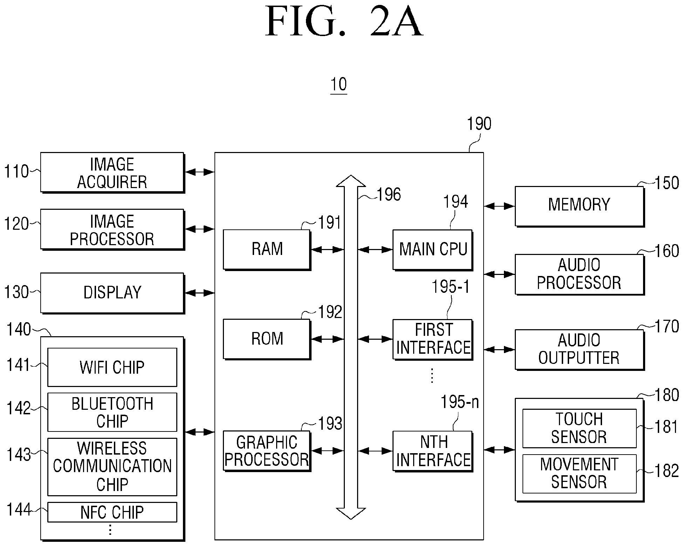

FIG. 2A is a block diagram of the electronic device 10 according to an embodiment.

Referring to FIG. 2A, the electronic device 10 may include at least one among an image acquirer 110, an image processor 120, a display 130, a communicator 140, a memory 150, an audio processor 160, an audio outputter 170, a sensor 180, and a controller 190. Meanwhile, the constitution of the electronic device 10 illustrated in FIG. 2A may be one of embodiments. The electronic device 10 may not be limited to the embodiment exemplified in the block diagram mentioned above. Thus, according to the type or the purpose of the electronic device 10, omission, modification or addition of certain part of the constitution of the electronic device 10 in FIG. 2A is possible.

The image acquirer 110 may obtain image data through various sources. For example, the image acquirer 110 may receive image data from an external server and an external device.

Further, the image acquirer 110 may obtain image data by photographing the external environment. For example, the image acquirer 110 may be implemented as a camera photographing the external environment of the electronic device 10. In this case, the image acquirer 110 may include a lens (not illustrated) through which an image is transmitted and an image sensor (not illustrated) which senses the image transmitted through the lens. The image sensor (not illustrated) may be implemented as a CCD image sensor or a CMOS image sensor. The image data obtained through the image acquirer 110 may be processed at the image processor 120.

The image processor 120 is configured to process the image data received from the image acquirer 110. The image processor 120 may perform various processing such as decoding, scaling, noise filtering, frame rate converting, or resolution converting of the image data.

The display 130 may display at least one among the video frame which is the image data processed at the image processor 120 or various screens generated at a graphic processor 193 on the display area. The display area of the display 130 may be an area where information can be displayed, and it may be divided into a plurality of areas. According to an embodiment, the display 130 being divided into a plurality of areas may mean that the display area of the display 130 may be divided into a plurality of areas.

The display 130 may be provided in various sizes. For example, the display 130 may have the size of 3 inches, 4 inches, 4.65 inches, 5 inches, 6.5 inches, or 8.4 inches. The display 130 may be composed of a plurality of pixels. Herein, a horizontal number x a vertical number regarding a plurality of pixels may express the resolution. For example, the display 130 may have 320x320, 360x480, 720x1280, 1280x800, or 3940x2160 resolution.

According to an embodiment, a certain number of pixels may be activated among a plurality of pixels of the display 130, and a certain number of pixels may be inactivated.

For example, some of the plurality of pixels may be selectively activated or inactivated according to whether each pixel of a panel included in the display 130 is turned on or off.

Specifically, regarding organic light emitting diodes (OLED) or active-matrix organic light emitting diodes (AM-OLED) display, elements of the display may be respectively turned on or off. Thus, a plurality of pixels included in the area corresponding to the specific notice information among a plurality of areas may be exclusively activated.

As another example, some of a plurality of pixels may be selectively activated or inactivated based on adjustment of a brightness value of lamp included in the display 130. In this case, when a brightness value of a lamp corresponding to a particular pixel is low or when a lamp is turned off and the particular pixel is hardly visible, it can be considered that the particular pixel is inactivated.

Specifically, the display 130 may include a lamp driver capable of controlling brightness for each pixel or for each area composed of a group of pixels.

The lamp driver may be present per number of pixels or per area which is a group of pixels. The lamp driver may include a voltage signal control generator, a converter, and the like. The voltage signal control generator may generate a voltage control signal corresponding to a lamp supply voltage value received from the controller 190, and transmit the generated voltage control signal to a converter. The converter may control an output voltage of the lamp driver according to the received voltage control signal. Accordingly, the lamp driver may adjust brightness of the lamp based on the received lamp supply voltage value.

As another example, by setting a certain number of R, G and B values among a plurality of pixels low, some of the plurality of pixels may be selectively activated or inactivated. For example, when R, G and B values of a pixel are (0, 0, 0), it can be considered that the corresponding pixel is inactivated.

The display 130 may be coupled with at least one among the front face area, the sectioned area and the rear face area of the electronic device 10 in the flexible display form. The flexible display may be bent or curved without being damaged due to a substrate which is as thin and flexible as a paper sheet. The flexible display may be produced with the plastic substrate as well as glass substrate which is generally used. When the plastic substrate is used, the flexible display may be formed with a low temperature producing processor instead of the conventionally-used producing processor in order to prevent the damage on the substrate. Further, by substituting the glass substrate covering the flexible liquid crystal with the plastic film, the flexibility is obtained, allowing it to be folded and unfolded. In addition to the thinness and the lightness, the flexible display may have advantages of strong durability against shock, and curvability and bendability, and ability to be formed into various shapes.

The display 130 may be combined with a touch sensor 181 so as to be formed into a touch screen in layered structure. The touch screen may have a display function and a function to detect touch input pressure as well as touch input position and touch area size. Further, the touch screen may have not only a real-touch function, but also a function to detect the proximity touch.

The communicator 140 is configured to perform communication with various types of external devices according to various types of the communication methods. The communicator 140 may include at least one among a WiFi chip 141, a Bluetooth chip 142, a wireless communication chip 143, and a near field communication (NFC) chip 144. Further, the controller 190 may perform communication with an external server or various external devices by using the communicator 140.

Specifically, the WiFi chip 141 and the Bluetooth chip 142 may perform communication respectively according to WiFi communication method and Bluetooth communication method. When using the WiFi chip 141 or the Bluetooth chip 142, various connecting information such as SSID and session keys may be first transmitted and received so that the communication may be connected by using the received connecting information, and then various pieces of information may be transmitted and received. The wireless communication chip 143 may refer to chip to perform communication according to the various communication standards such as IEEE, Zigbee, 3G (3^{rd} Generation), 3GPP (3^{rd} Generation Partnership Project), and LTE (Long Term Evolution). The NFC chip 144 may refer to chip to operate according to NFC (Near Field Communication) method using 13.56 MHz bandwidths among the various RF-ID frequency bandwidths such as 135 kHz, 13.56 MHz, 433 MHz, 860∼960 MHz, and 2.45 GHz.

The memory 150 may store various programs and data requested for the operation of the electronic device 10. The memory 150 may be implemented as non-volatile memory, volatile memory, flash memory, hard disc drive (HDD) or solid state drive (SDD). The memory 150 may be accessed by the controller 190, and the controller 190 may perform reading, recording, revising, deleting, and renewing of the data in the memory 150. According to an embodiment, the term "memory" may include the memory 150, ROM (not illustrated) and RAM (not illustrated) within the controller 190, or a memory card (not illustrated) attached on the electronic device 10 (e.g., micro SD card or memory stick).

Further, the memory 150 may store programs and data to generate various screens to be displayed on the display area of the display 130.

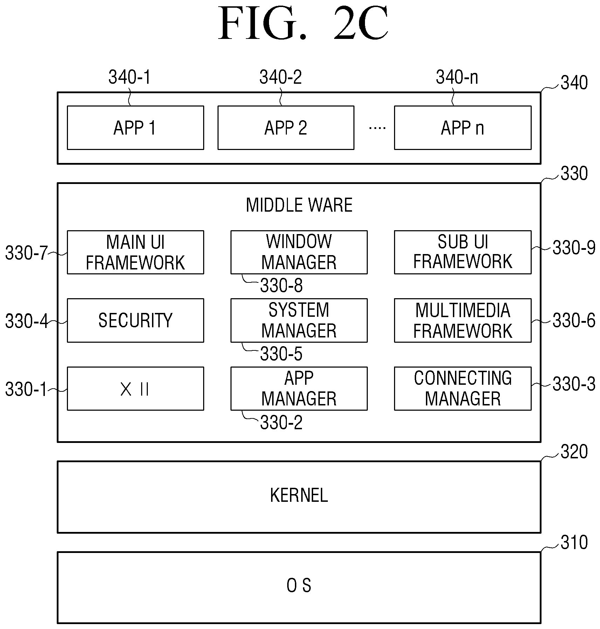

The following will describe structure of the software stored in the memory 150 by referring to FIG. 2C. In FIG. 2C, the memory 150 may store the software including OS 310, kernel 320, middleware 330, and application 340.

The OS 310 (Operating System) may perform a function to control and manage general operation of the hardware. Thus, OS 310 may be a layer which manages basic functions such as hardware management, memory, or security.

The kernel 320 may serve as a passage to deliver various signals including a touch signal sensed at the sensor 180 to the middleware 330.

The middleware 330 may include various software modules to control the operation of the electronic device 10. Referring to FIG. 2C, the middleware 330 may include a X11 module 330-1, a APP manager 330-2, a connecting manager 330-3, a security module 330-4, a system manager 330-5, a multimedia framework 330-6, a main UI framework 330-7, a window manager 330-8, and a sub UI framework 330-9.

The X11 module 330-1 is configured to receive various event signals from various hardware provided on the electronic device 10. Herein, the event may be variously set, such as, event of sensing user gestures, event of generating system alarms, and event of performing or completing a specific program.

The APP manager 330-2 is configured to manage status of executing various applications 340 installed on the memory 150. APP manager 330-2 may call and implement the application corresponding to the event when the event of implementing an application is sensed by the X11 module 330-1.

The connecting manager 330-3 is configured to support the wire or wireless network connection. The connecting manager 330-3 may include various sub modules such as DNET module and UPnP module.

The security module 330-4 is configured to support certification regarding the hardware, the request permission, or the secure storage.

The system manager 330-5 may monitor status of each element within the electronic device 10, and provide the monitoring results to the other modules. For example, when the battery is short, the error occurs, or the communication is disconnected, the system manager 330-5 may provide the monitoring results to the main UI framework 330-7 or the sub UI framework 330-9, and output a notice message or a notice sound.

The multimedia framework 330-6 is configured to reproduce the multimedia contents stored in the electronic device 10 or provided from external sources. The multimedia framework 330-6 may include a player module, a camcorder module and a sound processing module. Accordingly, the multimedia framework 330-6 may perform a function to reproduce various multimedia contents, create and reproduce images and sounds.

The main UI framework 330-7 is configured to provide various Uls to be displayed on the main area of the display 130. The sub UI framework 330-9 is configured to provide various Uls to be displayed on the sub areas. The main UI framework 330-7 and the sub UI framework 330-9 may include an image compositor module to construct various UI elements, a coordinate compositor module to calculate coordinates where UI elements are displayed, a rendering module to render the constructed UI elements on the calculated coordinates, and a 2D/3DUI toolkit to provide tools to construct UI in 2D or 3D form.

The window manager 330-8 may sense a touch event by a user body or a pen, or sense other input events. The window manager 330-8 may deliver the event signal to the main UI framework 330-7 or the sub UI framework 330-9 when such event is sensed so that corresponding operation to the event is performed.

Besides, the electronic device 10 may store various program modules such as a writing module to draw a line according to the dragging tracks and an angle calculating module to calculate pitch angle, roll angle, and yaw angle based on the sensed values in a movement sensor 182 when a user touches and drags on the screen.

The application module 340 may include applications 340-1 - 340-n to support various functions. For example, the application module 340 may include program modules to provide various services such as navigation program module, game module, electronic book module, calendar module, or alarm management module. The applications may be installed by default, or installed and used arbitrarily by a user. When UI element is selected, a main CPU 194 may implement the application corresponding to the selected UI element by using the application module 340.

The software structure illustrated in FIG. 2C is merely one of embodiments, and exemplary embodiments are not limited thereto. Thus, some modules may be deleted, modified or added according to the type or the purpose of the electronic device 10. For example, the memory 150 may additionally include other various program modules such as a sensing module to analyze the signals sensed at the various sensors, a messaging module like a messenger program, a text message program, and an e-mail program, a call info aggregator program module, a VoIP module, and a web browser module.

Referring to FIG. 2A again, the audio processor 160 is configured to perform processing regarding the audio data of the video contents. The audio processor 160 may perform processing regarding the audio data of the video contents. The audio processor 160 may perform various processing such as decoding, amplifying, and noise filtering regarding the audio data. The audio data processed at the audio processor 160 may be outputted to the audio outputter 170.

The audio outputter 170 is configured to output various alarm sounds or voice messages as well as audio data in which various processing is performed by the audio processor 160 such as decoding, amplifying or noise filtering. Specifically, the audio outputter 170 may be implemented as a speaker, although it may be merely one of embodiments. The audio outputter 170 may be implemented as outputting component that can output the audio data.

The sensor 180 may sense various user interactions. The sensor 180 may detect at least one among various changes of the electronic device 10 such as position changes, illumination changes, and acceleration changes, and deliver corresponding electrical signals to the controller 190. Thus, the sensor 180 may sense status changes performed based on the electronic device 10, generate corresponding sensing signals, and deliver a sensed result to the controller 190. According to an embodiment, the sensor 180 may be implemented as various sensors, and the electrical power may be provided to at least one sensor which is set according to the controlling of the sensor 180 when the electronic device 10 operates (or when a user establishes), which can sense the status changes of the electronic device 10.

The sensor 180 may include various sensors, and be constructed by including at least one device among all forms of sensing devices that can detect the status changes of the electronic device 10. For example, the sensor 180 may be constructed by including at least one sensor among various sensing devices such as touch sensor, acceleration sensor, gyro sensor, illuminance sensor, proximity sensor, pressure sensor, noise sensor (e.g., microphone), video sensor (e.g., camera module), pen recognizing sensor, and timer.

The sensor 180 may be distinguished into the touch sensor 181 and the movement sensor 182 according to the sensing purposes, but not limited thereto. Accordingly, the sensor 180 may be further configured distinguished depending on various other purposes. The distinguishing may not indicate the physical dividing. At least one or more sensors may be combined with each other, to thus perform the functions of the above-mentioned sensors 181, 182. Further, depending on the method as implemented, the constitution or the functions of the sensor 180 may be partially included in the controller 190.

The touch sensor 181 may sense a user finger input, and output a touch event value corresponding to the sensed touch signal. The touch panel of the touch sensor 181 may be installed under the display 130. The methods in which the touch sensor 181 senses the user finger input may be capacitive method and resistive method. The capacitive method is method to calculate a touch coordinate by sensing the micro electricity excited by the user body. The resistive method is method to calculate a touch coordinate by including two electrode substrates included in the touch panel and by sensing the electrical current flows when the upper and the lower substrates contact each other on the touched point.

The touch sensor 181 may obtain the output signal according to the user input on the touch sensor. The touch sensor 181 may calculate user input information such as touch position or touch coordinate, touch number, touch intensity, cell ID, touch angle or touch size from the signal values, and determine the type of the touch input by using the calculated user input information. Herein, the touch sensor 181 may determine the type of the touch input by using the touch recognizing algorithms and the touch pattern data on the memory (not illustrated) of the touch panel. When the type of the touch input is determined, the touch sensor 181 may transmit the information regarding the type of the touch input to the controller 190. The touch sensor 181 may sense the approaching touch position (or hovering position) inputted by a user, as described above.

The controller 190 may perform part of the functions regarding the touch sensor 181. For example, the touch sensor 181 may transmit the signal value obtained from the touch sensor or the user input information calculated from the signal value to the controller 190. The controller 190 may determine the type of the touch input by using the received signal value or the user input information with the touch recognizing algorithms and the touch pattern data stored on the memory 150. Further, when the call application is executed, the controller 190 may detect that the call button of the call application is selected from the user input information or the type of the touch input, and transmit the signal through the communicator 140 to the contact person.

The movement sensor 182 may sense the movement of the electronic device 10 (e.g., rotating or tilting) by using at least one among the acceleration sensor, the tilt sensor, the gyro sensor, and the 3-axis magnetic sensor. Further, the movement sensor 182 may deliver the generated electrical signal to the controller 190. For example, the movement sensor 182 may measure the acceleration in which the movement acceleration of the electronic device 10 is added with the gravity acceleration. However, the movement sensor 182 may measure only the gravity acceleration unless the electronic device 10 moves.

For example, it is assumed herein that the movement sensor 182 uses the acceleration sensor. The gravity acceleration may be measured respectively regarding X, Y, and Z axes based on the electronic device 10. Herein, when the front face of electronic device 10 is directed upward, the direction is assumed to be positive (+) direction of the gravity acceleration. When the rear face of the electronic device 10 is directed upward, the direction is assumed to be negative (-) direction of the gravity acceleration. When the rear face of the electronic device 10 contacts and lain on the horizontal plane, the gravity acceleration measured by the movement sensor 182 may be 0 m/sec² on X and Y axes and specific positive value on Z axis (e.g., + 9.8 m/sec²). On the contrary, when the front face of the electronic device 10 contacts and lain on the horizontal plane, the gravity acceleration measured by the movement sensor 182 may be 0 m/sec² on X and Y axes, and specific negative value on Z axis (e.g., - 9.8 m/sec²). Further, when the electronic device 10 is assumed to be tiltingly lain on the surface of the table, the gravity acceleration measured by the movement sensor 182 may be values other than 0 m/sec² on at least one axis. Herein, a square-root of the value calculated by adding the multiple values of the three elements on the three axes, i.e., the size of the vector sum may be the specific value mentioned above (e.g., 9.8 m/sec²). In this case, the movement sensor 182 may sense the acceleration values respectively regarding X, Y, and Z axes on the coordinate system. Meanwhile, the axes and corresponding gravity accelerations can be modified according to the attached position of the sensor.

The sensor 180 may further include a pen sensor (e.g., pen recognizing panel, not illustrated). The pen sensor may sense a user pen input made as the user touch pen (e.g., stylus pen or digitizer pen) is operated, and output a pen approaching event value or a pen touch event value. The pen sensor may be implemented with EMR method, and may sense the touch input or the approach input according to the intensity changes of the electromagnetic fields with the pen approach or the pen touch. Specifically, the pen recognizing panel may be constructed by including an electrical induction coil sensor having a grid structure and an electrical signal processor consecutively providing the AC signals of a certain frequency to each loop coil of the electrical induction coil sensor. When the pen including the resonance circuits is provided adjacent to the loop coil in the pen recognizing panel, the magnetic field transmitted from the corresponding loop coil generates the electrical currents based on the electrical induction on the resonance circuits within the pen. Based on the electrical currents, the induced magnetic field is generated from the coils of the resonance circuits within the pen, and the pen recognizing panel may detect the induced magnetic field from the loop coil in the signal receiving state. Thus, the pen approach position or the touch position may be sensed.

The microphone (not illustrated) may receive a user voice to control a medical device (e.g., photography start, photography stop, or photography end) through the electronic device 10, and may recognize the user voice through the voice recognizing module. Further, the recognized result may be transmitted to the controller 190. Herein, the voice recognizing module may be positioned somewhere other than the microphone, such as, on a part of the controller 190 or outside the electronic device 10.

The controller 190 (or processor) may control overall operation of the electronic device 10 by using the various programs stored on the memory 150.

The controller 190 may include RAM 191, ROM 192, a graphic processor 193, the main CPU 194, a first to a (n)th interfaces (195-1 - 195-n), and a bus 196. Herein, RAM 191, ROM 192, the graphic processor 193, the main CPU 194, and the first to the (n)th interfaces 195-1 - 195-n may be connected to each other through the bus 196.

The RAM 191 may store O/S and application programs. Specifically, when the electronic device 10 boots, O/S may be stored on RAM 191, and the various application data selected by a user may be stored on RAM 191.

The ROM 192 may store command sets for the system booting. When a turn-on command is inputted and the electrical power is provided, the main CPU 194 may copy the stored O/S on the memory 150 to RAM 191 according to the commands stored on ROM 192, and boot the system by implementing O/S. When booting completes, the main CPU 194 may copy the various application programs stored on the memory 150 to RAM 191, and perform various operations by implementing the copied application programs in RAM 191.

The graphic processor 193 may generate a screen including various objects such as items, images and texts by using a calculator (not illustrated) and a renderer (not illustrated). Herein, the calculator may be configured to calculate feature values such as coordinate values, shapes, sizes and colors in which each object will be displayed according to layouts of the screen by using the controlling commands received from the sensor 180. Further, the renderer may be configured to generate the screen in the various layouts including objects based on the feature values calculated at the calculator. The screen generated by the renderer may be displayed within the display area of the display 130.

The main CPU 194 may access the memory 150, and perform booting by using the stored O/S on the memory 150. Further, the main CPU 194 may perform various operations by using the stored various programs, contents, and data on the memory 150.

The first to the (n)th interfaces 195-1 - 195-n may be connected with the various constituent elements mentioned above. One of the first to the (n)th interfaces 195-1 - 195-n may be network interface connected with the external device through the network.

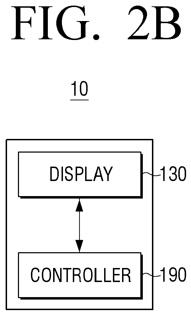

FIG. 2B is a brief block diagram of the electronic device 10 according to another embodiment.

Referring to FIG. 2B, the electronic device 10 may include the display 130 and the controller 190.

The display 130 may be divided into a plurality of areas respectively corresponding to a plurality of notice information. A plurality of notice information may respectively belong to a plurality of groups.

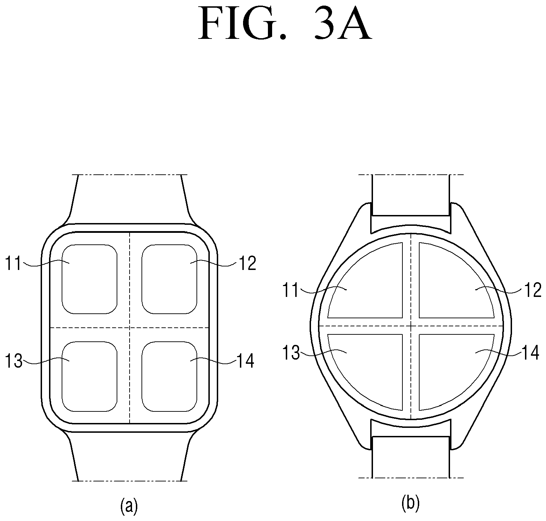

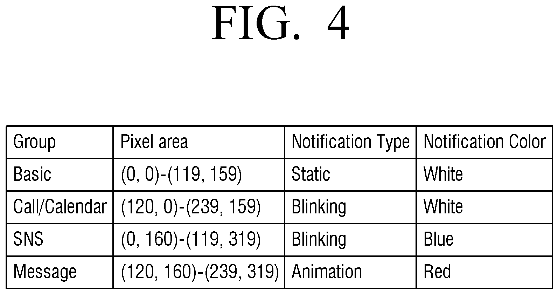

FIG. 3A is a diagram illustrating that the display 130 is divided into a plurality of areas respectively corresponding to a plurality of groups according to an embodiment. For example, a plurality of groups may be basic group, call/schedule group, SNS (social network service) group, and message group. The examples regarding the notice information belonging to a plurality of groups will be specifically described below by referring to FIG. 4.

Referring to FIG. 3A, (a) illustrates the display 130 in the square shape, and (b) illustrates the display 130 in the circle shape. However, this is merely one of embodiments. The display 130 that can be applied to an embodiment may have various shapes.

Referring to FIG. 3A, a plurality of groups may respectively correspond to a upper left area 11, a upper right area 12, a lower left area 13, and a lower right area 14 of the display 130, although this is merely one of embodiments. Accordingly, a plurality of areas respectively corresponding to a plurality of groups may correspond to the various positions of the display 130.

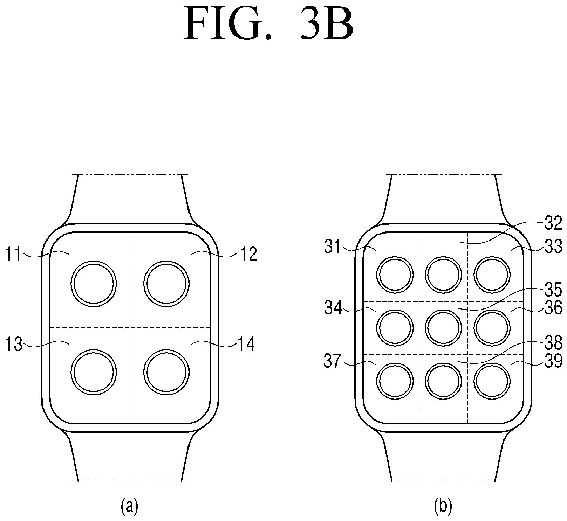

FIG. 3B is a diagram illustrating that the display 130 is divided into a plurality of areas respectively corresponding to a plurality of groups, according to an embodiment.

Referring to (a) of FIG. 3B, a plurality of groups may respectively correspond to a plurality of areas which are divided to 2x2. Specifically, a plurality of groups may respectively correspond to the upper left area 11, the upper right area 12, the lower left area 13, and the lower right area 14 of the display 130. Further, referring to (b) of FIG. 3B, a plurality of groups may respectively correspond to a plurality of areas which are divided to 3x3. Specifically, a plurality of groups may respectively correspond to a plurality of divided areas 31 - 39 on the display 130. Besides, although not illustrated, a plurality of areas may be divided into various arrangements such as 1x2, 2x1, 3x4, 4x3, 4x4. Further, a plurality of areas may have various shapes such as square, circle, fan, and polygon, but not limited thereto.

When the event related with the notice information is sensed, the controller 190 may control the display 130 to activate pixels included in the area corresponding to the notice information among a plurality of areas. Thus, the controller 190 may control the display 130 to activate the pixels included in the area corresponding to a group to which the notice information related with the sensed event belong, among the areas corresponding to a plurality of groups. Further, the controller 190 may control the display 130 to inactivate pixels included in the areas corresponding to groups to which the notice information do not belong, among the areas corresponding to a plurality of groups. Herein, the event may refer to command signal or interrupt signal to cause the electronic device 10 to operate in a specific function. For example, when a message is received from the external device, the controller 190 may sense the external interrupt signal related with the arrival of the message.

The electronic device 10 may further include a memory 150 to include mapping information in which a plurality of areas are mapped with a plurality of groups to which the notice information belong.

FIG. 4 is a diagram illustrating the mapping information according to an embodiment.

Referring to FIG. 4, a plurality of groups to which the notice information included in the mapping information belong, may include a basic group, a call/schedule group, a SNS (social network service) group, and a message group.

The notice information may belong to one group among a plurality of groups according to the types of the notice information. The types of the notice information may be determined based on at least one among an application processing the notice information, the importance of the notice information, the size of the notice information, the sender of the notice information, the descriptions of the notice information, and the data type of the notice information. Further, the types of the notice information may be determined based on other various standards.

For example, the notice information included in the basic group may include at least one among the alarm information, the timer information, the battery information of the electronic device 10, and the communication information of the electronic device 10.

The notice information included in the call/schedule group may include at least one among the call reception information and the schedule information previously registered by a user.

The notice information included in the SNS group may, for example, include social service information indicating that twit, comment, and content is registered/deleted/modified in a social server.

The notice information included in the message group may include at least one among the text message information, the e-mail message information and the instant message information.

Although FIG. 4 exemplifies that the notice information belong to any of the basic group, the call/schedule group, SNS group, and the message group, although not limited thereto. The notice information may be divided into various groups. For example, the notice information may be divided into an ad group, a normal importance group, and an importance group. Further, the notice information may be divided into the application group having a high use frequency, the application group having a middle use frequency, and the application group having a low use frequency. Further, the notice information may be divided into a text group, an image group, a video group, and a document group.

Referring to FIG. 4, the pixel area may refer to area where pixels are activated respectively regarding a plurality of groups, and where the group notice information are displayed respectively regarding a plurality of groups.

For example, when the resolution of the display 130 is 240x320, the group notice information of the basic group may be displayed on the pixel area (0, 0) - (119, 159). Further, the group notice information of the call/schedule group may be displayed on the pixel area (120, 0) - (239, 159). Further, the group notice information of SNS group may be displayed on the pixel area (0, 160) - (119, 319). Further, the group notice information of the message group may be displayed on the pixel area (120, 160) - (239, 319).

In FIG. 4, the "notification type" of the group notice information may refer to form in which the group notice information is displayed. For example, the "static type" may refer to the group notice information displayed as static images, texts or graphics (e.g., geometric figures). For another example, the "dynamic type" may refer to the group notice information displayed as dynamic images, texts or graphics (e.g., geometric figures). The "dynamic type" may include blinking type or animation type. The "blinking type" may refer to the group notice information displayed in a blinking manner according to a certain period or certain rule. Further, the "animation type" may refer to the group notice information changing position or moving as it is displayed. In FIG. 4, the group notice information included in the basic group may be displayed as the static type, the notice information included in the call/schedule and SNS groups may be displayed as the blinking type, and the notice group information included in the message group may be displayed as the animation type.

Further, the notification color of the group notice information may refer to the color of the displayed group notice information in FIG. 4. The group notice information included in the basic group and the call/schedule group may be displayed in white, the group notice information included in SNS group may be displayed in blue, and the notice group information included in the message group may be displayed in red.

Although not illustrated in FIG. 4, the mapping information may further include count information indicating whether or not to display a number of the notice information belonging to the group respectively regarding a plurality of groups. For example, when the mapping information is set to display the count information of the message group, the controller 190 may control the display 130 to display a number of the notice information belonging to the message group on the area corresponding to the message group.

The above described mapping information may be previously set by a provider of the applications installed on the electronic device 10 or a provider of the management system. Further, the mapping information may be designated by a user through the user interface.

When activating the pixels included in the area corresponding to the group to which the notice information belong, the controller 190 may control the display 130 to display the group notice information of the group to which the notice information belong, on the activated area.

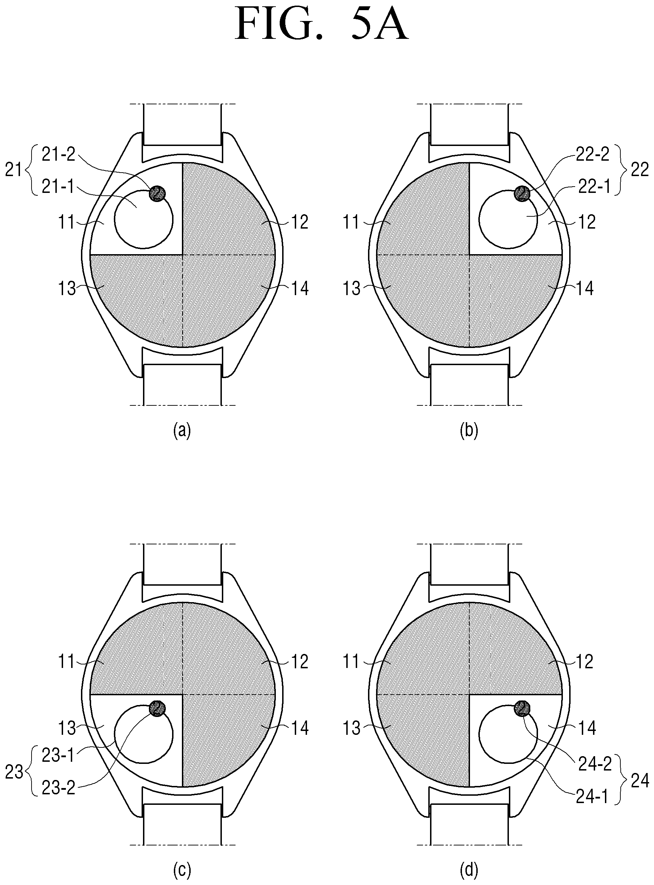

FIGS. 5A to 5C are diagrams illustrating an example of the group notice information according to an embodiment.

Referring to FIG. 5A, the group notice information 21 - 24 may be displayed on one area among a plurality of areas 11 - 14 of the display 130. The group notice information 21 - 24 may include at least one among a graphic of one color displayed on one area of the display 130 and a number of the notice information belonging to the group. In this case, among a plurality of areas, the upper left area 11 may correspond to the private group, the upper right area 12 may correspond to the public group, the lower left area 13 may correspond to the call/message group, and the lower right area 14 may correspond to the schedule group.

When the event related with the notice information belonging to the private group is sensed, the controller 190 may control the display 130 to display a first color graphic 21-1 and a number of the notice information belonging to the private group 21-2 as group notice information 21 of the private group on the upper left area 11 of the display 130, as illustrated in (a) of FIG. 5A. Herein, the notice information belonging to the private group may be alarm information set by a user for the private living.

Further, when the event related with the notice information belonging to the public group is sensed, the controller 190 may control the display 130 to display a second color graphic 22-1 and a number of the notice information belonging to the public group 22-2 as group notice information 22 of the public group on the upper right area 12 of the display 130, as illustrated in (b) of FIG. 5A. Herein, the notice information belonging to the public group may be news information, ad information or weather information that can be opened to a third party.

Further, when the event related with the notice information belonging to the call/message group is sensed, the controller 190 may control the display 130 to display a third color graphic 23-1 and a number of the notice information 23-2 as group notice information 23 of the call/message group on the lower left area 13 of the display 130, as illustrated in (c) of FIG. 5A.

Further, when the event related with the notice information belonging to the schedule group is sensed, the controller 190 may control the display 130 to display a fourth color graphic 24-1 and a number of the notice information 24-2 as group notice information 24 of the schedule group on the lower right area 14 of the display 130, as illustrated in (d) of FIG. 5A.

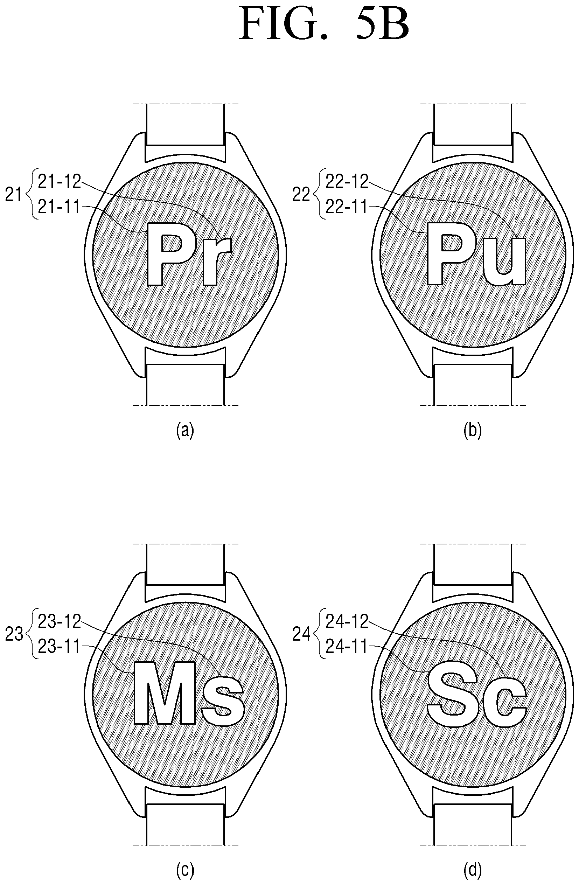

Referring to FIG. 5B, the group notice information 21 - 24 may be texts representing the group notice information 21 - 24 displayed on the display area of the display 130. Herein, pixels 21 - 24 corresponding to the texts on the display area may be activated, and pixels not corresponding to the texts may be inactivated.

When the event related with the notice information belonging to the private group is sensed, the controller 190 may control the display 130 to activate the pixels 21-11, 21-12 corresponding to the text 21 as group notice information 21 of the private group on the display area of the display 130, as illustrated in (a) of FIG. 5B.

Further, when the event related with the notice information belonging to the public group is sensed, the controller 190 may control the display 130 to activate the pixels 22-11, 22-12 corresponding to the text 22 as group notice information 22 of the public group on the display area of the display 130, as illustrated in (b) of FIG. 5B.

Further, when the event related with the notice information belonging to the call/message group is sensed, the controller 190 may control the display 130 to activate the pixels 23-11, 23-12 corresponding to the text 23 as grou notice information 23 of the call/message group on the display area of the display 130, as illustrated in (c) of FIG. 5B.

Further, when the event related with the notice information belonging to the schedule group is sensed, the controller 190 may control the display 130 to activate the pixels 24-11, 24-12 corresponding to the text 24 as group notice information 24 of the schedule group on the display area of the display 130, as illustrated in (d) of FIG. 5B.

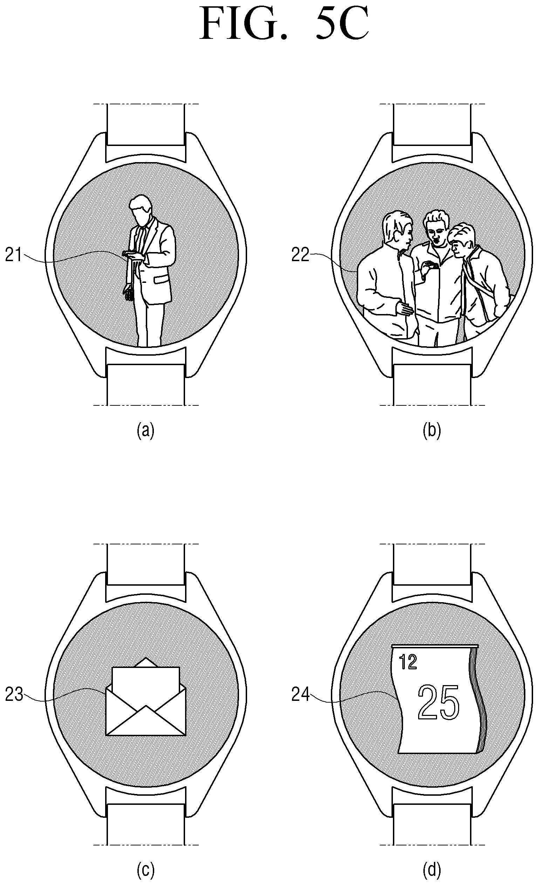

Referring to FIG. 5C, the group notice information 21 - 24 may be images representing the group notice information 21 -24 displayed on the display area of the display 130. Herein, the pixels 21 - 24 corresponding to the images on the display area may be activated, and the pixels not corresponding to the images may be inactivated.

When the event related with the notice information belonging to the private group is sensed, the controller 190 may control the display 130 to activate the pixels 21 corresponding to the image 21 as group notice information 21 of the private group on the display area of the display 130, as illustrated in (a) of FIG. 5C.

Further, when the event related with the notice information belonging to the public group is sensed, the controller 190 may control the display 130 to activate the pixels 22 corresponding to the image 22 as group notice information 22 of the public group on the display area of the display 130, as illustrated in (b) of FIG. 5C.

Further, when the event related with the notice information belonging to the call/message group is sensed, the controller 190 may control the display 130 to activate the pixels 23 corresponding to the image 23 as group notice information 23 of the call/message group on the display area of the display 130, as illustrated in (c) of FIG. 5C.

Further, when the event related with the notice information belonging to the schedule group is sensed, the controller 190 may control the display 130 to activate the pixels 24 corresponding to the image 24 as group notice information 24 of the schedule group on the display area of the display 130, as illustrated in (d) of FIG. 5C.

Meanwhile, although not illustrated, another example of the group notice information may be group name, group initial, group nickname, or group related animation. These group notice information may be previously set by a provider of the applications installed on the electronic device 10 or a provider of the management system. Further, they may be set by a user through the user interface.

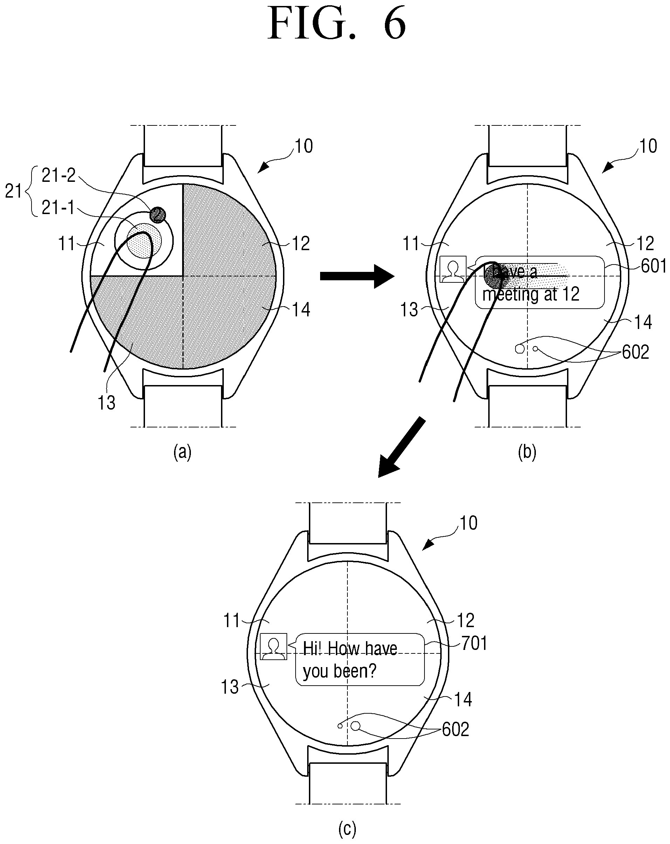

The following will describe the user interface to display the notice information by referring to FIGS. 6 to 10B.

Referring to FIG. 6, the display 130 may be divided into a plurality of areas 11 - 14 respectively corresponding to a plurality of notice information. Thus, the display 130 may be divided into a plurality of areas 11 - 14 corresponding to a plurality of groups to which a plurality of notice information belong.

Referring to (a) of FIG. 6, when the event (e.g., receiving a text message) related with the notice information (e.g., text message information) is sensed, the controller 190 may control the display 130 to activate the pixels included in the area 11 corresponding to the notice information. Further, the controller 190 may control the display 130 to inactivate the pixels included in the areas 12 - 14 not corresponding to the notice information. Thus, the controller 190 may control the display 130 to activate the pixels included in the area 11 corresponding to the group to which the notice information belong, and inactivate the pixels included in the areas 12 - 14 corresponding to the groups to which the notice information do not belong.

Further, the controller 190 may control the display 130 to display the group notice information 21 of the group to which the notice information belong, on the activated pixel area. For example, the group notice information 21 may be graphic representing the group 21-1 or a number of the notice information not read by a user and belonging to the group 21-2.

The sensor 180 may sense a user input of selecting the group notice information 21.

When a user input is sensed, the controller 190 may control he display 130 to display the first notice information 601 among the notice information, as illustrated in (b) of FIG. 6. For example, the controller 190 may control the display 130 to display the descriptions of the text message received from a first another user. Herein, the controller 190 may control the display 130 to display an indicator 602 indicating a number of the notice information. Next, the sensor 180 may sense a user input of touching and dragging toward a first direction (e.g., left or right direction) on the display 130.

When a user input is sensed, the controller 190 may control the display 130 to display the second notice information 701 among the notice information, as illustrated in (c) of FIG. 6. For example, the controller 190 may control the display 130 to display the descriptions of the text message received from a second another user.

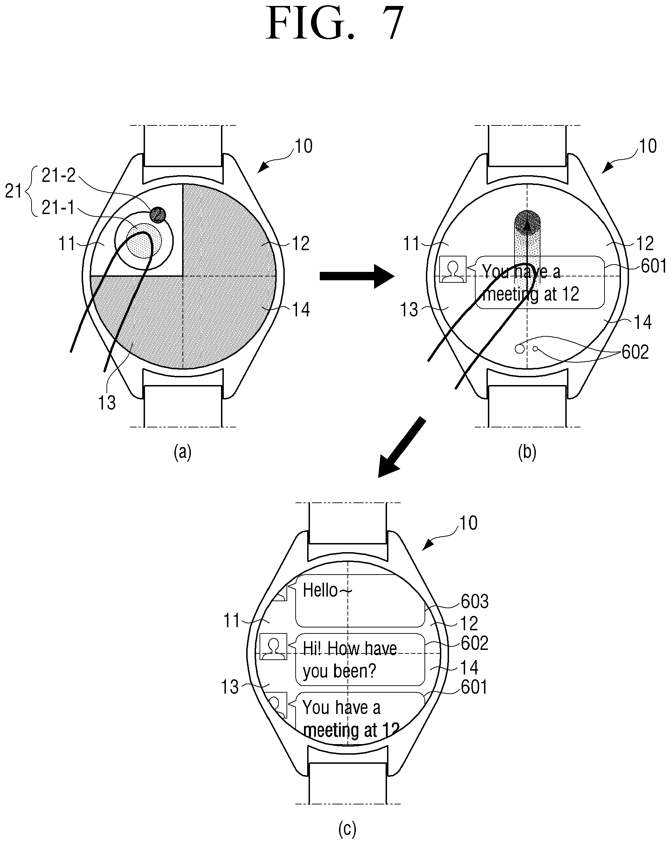

FIG. 7 is a diagram illustrating the user interface screen to display the notice information according to an embodiment.

Because (a) and (b) of FIG. 7 correspond to (a) and (b) of FIG. 6, the relevant explanation is not provided herein.

Referring to (b) of FIG. 7, the sensor 180 may sense a user input of touching and dragging toward a second direction (e.g., upper or lower direction) on the display 130 while the detailed descriptions of the first notice information 601 are displayed.

When a user input is sensed, the controller 190 may control the display 130 to display the other first notice information 602, 603 received from the first another user, as illustrated in (c) of FIG. 7. For example, the controller 190 may control the display 130 to display the descriptions of the text messages previously transmitted and received with the first another user.

Although not illustrated, the controller 190 may control the display 130 to display the part of the notice information (e.g., part of the descriptions in a text message) when the group notice information is selected according to another embodiment. In this case, when a user input of touching and dragging on the display 130 is sensed, the controller 190 may control the display 130 to display another part of the notice information (e.g., another part of the descriptions in a text message).

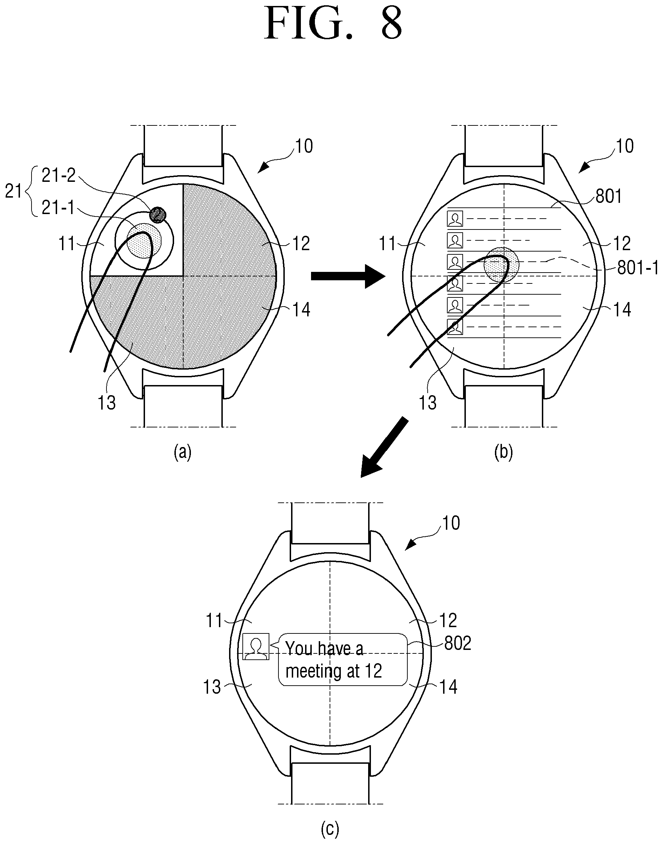

FIG. 8 is a diagram illustrating the user interface screen to display the notice information according to an embodiment.

Because (a) of FIG. 8 corresponds to (a) of FIG. 6, the relevant explanation is not provided herein.

The sensor 180 may sense a user input of selecting the group notice information 21 while the group notice information 21 is displayed, as illustrated in (a) of FIG. 8. In this case, the controller 190 may control the display 130 to display the group notice list 801, as illustrated in (b) of FIG. 8. Next, the sensor 180 may sense a user input of selecting the identification information 801-1 of the notice information on the notice information list 801.

When a user input is sensed, the controller 190 may control the display 130 to display the selected notice information 802, as illustrated in (c) of FIG. 8.

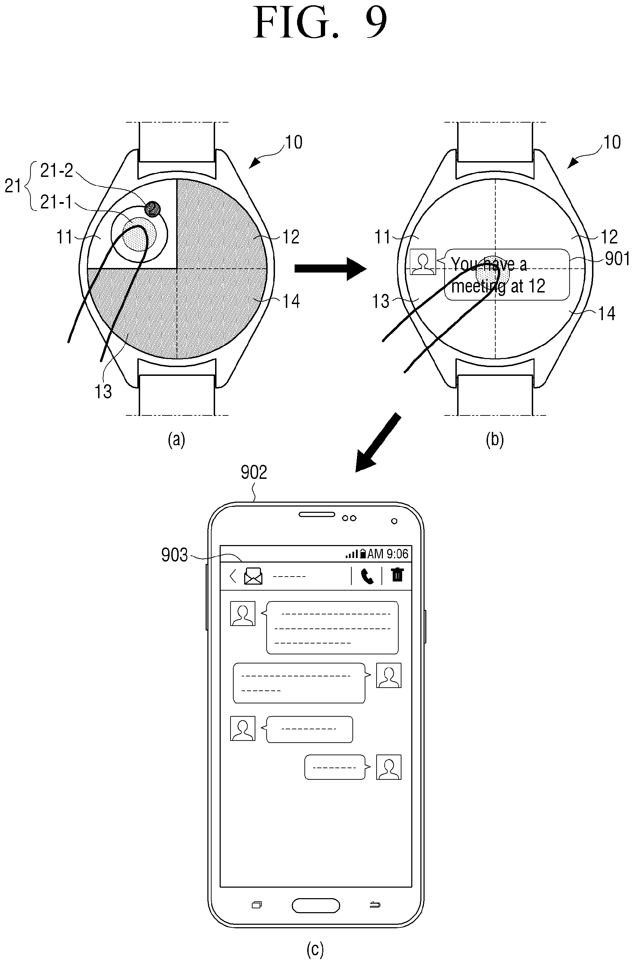

FIG. 9 is a diagram illustrating the user interface screen to display the notice information according to an embodiment.

Because (a) and (b) of FIG. 9 correspond to (a) and (b) of FIG. 6, the relevant explanation is not provided herein.

Referring to (b) of FIG. 9, the sensor 180 may sense a user input of selecting the first notice information 901 on the display 130 while the first notice information 901 is displayed. In this case, the controller 190 may control the external device 902 to display the implementing screen 903 of the application related with the first notice information (e.g., text message application) on the external device 902, as illustrated in (c) of FIG. 9. Herein, the application implementing screen 903 may display the notice information transmitted and received with the first another user as well as first notice information.

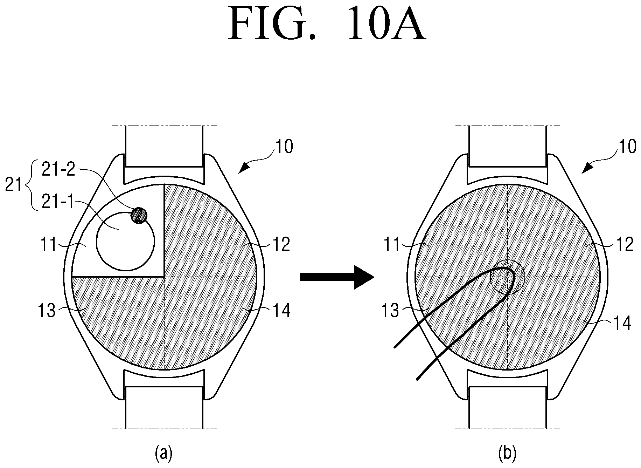

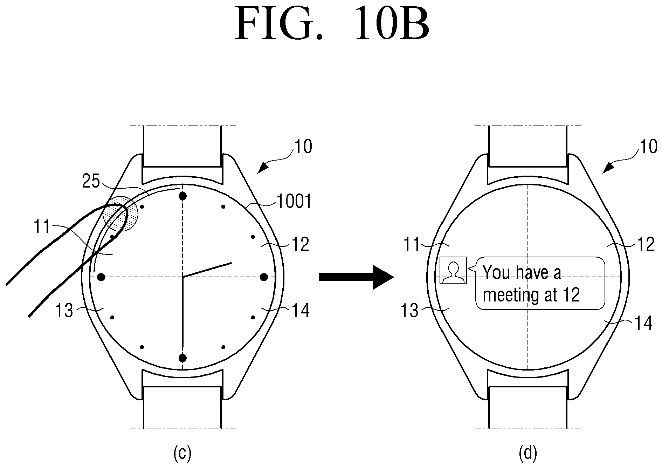

FIGS. 10A and 10B are diagrams illustrating the user interface screen to display the notice information according to an embodiment.

Because (a) of FIG. 10A corresponds to (a) of FIG. 6, the relevant explanation is not provided herein.

A user input may not be sensed for a certain time (e.g., two seconds) while the group notice information is displayed in (a) of FIG. 10A. In this case, the controller 190 may control the display 130 to be inactivated, as illustrated in (b) of FIG. 10A. Herein, the inactivated display 130 may include the black screen state of the display 130, the off state of the display panel in the display 130, or the state that may not display any information on the display 130.

Next, when a user input is sensed on the inactivated display 130, the controller 190 may control the display 130 to display watch screen 1001, as illustrated in (c) of FIG. 10B. The watch screen 1001 may refer to initial screen or stand-by screen of the smart watch including the current time information (e.g., analogue time information using the hour and minute hands or digital time information using the number graphics). However, according to an embodiment, devices that can display the watch screen 1001 may not be limited to the smart watch; various types of the electronic device 10 including the time information display function may display the watch screen 1001.

Specifically, when the smart watch is converted from the off state to the on state, the display 130 of the smart watch may display the watch screen 1001 as initial screen of the smart watch. In this case, when a user input is sensed on the watch screen, the controller 190 may display the list or the identification information regarding the applications that can be implemented by the smart watch. Further, the controller 190 may display the notice information received by the smart watch. Further, when a user input is not sensed for a certain time while the smart watch is operating, the display 130 of the smart watch may display the watch screen 1001 as stand-by screen of the smart watch. In this case, when a user input is sensed on the watch screen, the controller 190 may display the list or the identification information regarding the applications that can be implemented by the smart watch. Further, the controller 190 may display the notice information received by the smart watch.

Herein, the watch screen 1001 may be divided into a plurality of areas 11 - 14 corresponding to a plurality of notice information. In other words, the watch screen 1001 may be divided into a plurality of areas 11 - 14 corresponding to the groups to which a plurality of notice information belong.

In this case, the controller 190 may control the display 130 to display the group notice information 25 on the area 11 corresponding to a group to which the notice information belong, among a plurality of areas 11 - 14. Next, the sensor 180 may sense a user input of selecting the group notice information.

When a user input is sensed, the controller 190 may control the display 130 to display the notice information, as illustrated in (d) of FIG. 10B.

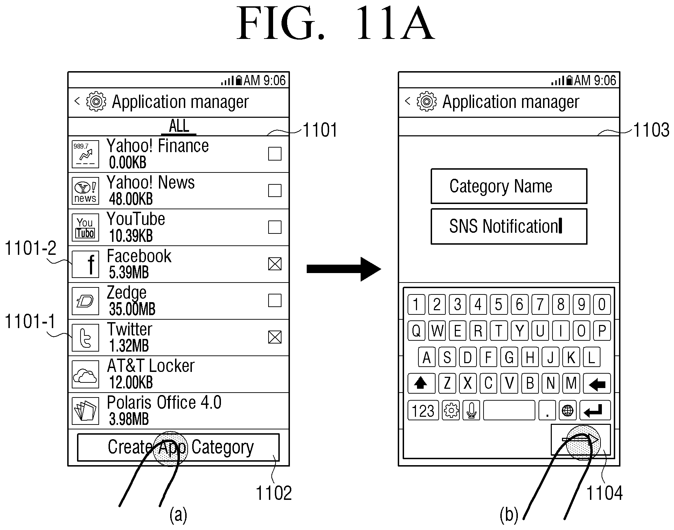

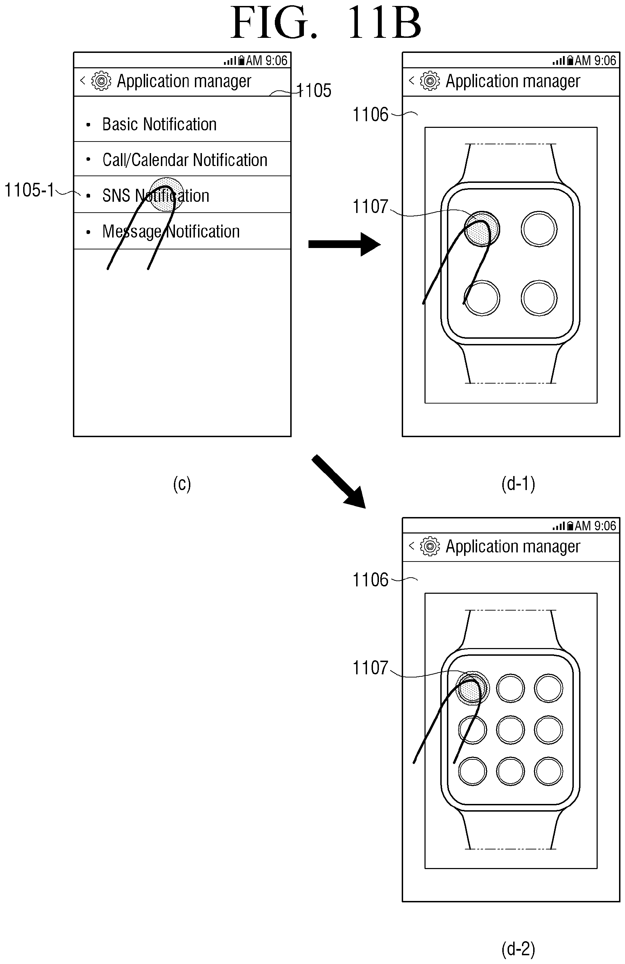

FIGS. 11A and 11B are diagrams illustrating the user interface screen to establish a group to which the notice information belong, according to an embodiment.

Referring to (a) of FIG. 11A, the controller 190 may control the display 130 to display the application list 1101 related with the notice information. The sensor 180 may sense a user input of selecting UI element 1102 for creating a group to which the notice information provided by the application belong, while at least one identification information 1101-1, 1101-2 of the application are selected from the application list 1101, as illustrated in (a) of FIG. 11A.

When a user input is sensed, the controller 190 may control the display 130 to display the screen 1103 to receive the input of the group name, as illustrated in (b) of FIG. 11A.

Next, the sensor 180 may input the group name, and sense a user input of selecting UI element 1104 for setting the name.

When a user input is sensed, the controller 190 may control the display 130 to display the group list 1105, as illustrated in (c) of FIG. 11B. The group list 1105 may include the basic group, the call/schedule group, the social network service group and the message group for example. Next, the sensor 180 may sense a user input of selecting one group 1105-1 included in the group list.

When a user input is sensed, the controller 190 may control the display 130 to display the screen 1106 to determine the area corresponding to the group, as illustrated in (d-1) or (d-2) of FIG. 11B. Next, the sensor 180 may receive a user input of selecting the area 1107 corresponding to the selected group 1105-1.

When the notice information related with the application belonging to the selected group 1105-1 is received, the controller 190 may control the display 130 to display the group notice information on the area 1107 corresponding to the group 1105-1.

Meanwhile, the controller 190 may activate the first area of the touch panel in the touch sensor 181 and inactivate the second area of the touch panel. The above operation may refer to that the controller 190 may process a touch input sensed through the first area of the touch panel and may not process a touch input sensed through the second area of the touch panel. Further, the above operation may refer to that the controller 190 may limit the electrical charging amount of the second area under a certain value so that a touch input on the second area of the touch panel is not sensed. Further, the above operation may refer to that the controller 190 may block the electrical power supply of the components related with the second area of the touch panel. Further, the above operation may include that the controller 190 may not process an outputting value or may not provide corresponding visual feedback even when the controller 190 receives a touch outputting signal generated in the touch sensor corresponding to the second area of the touch panel.

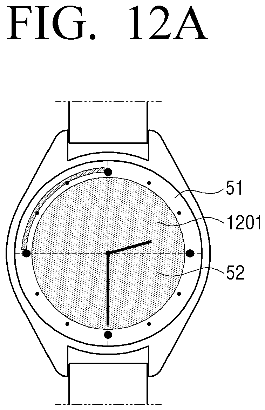

When the display 130 is combined with a touch screen in the layered structure by being coupled with the touch sensor 181, the controller 190 may control the first area of the touch screen to be activated and the second area of the touch screen to be inactivated. For example, FIG. 12A is a diagram illustrating the watch screen 1201 displayed on the touch screen.

Referring to FIG. 12A, the controller 190 may control the outer area of the touch screen (or, boundary area) 51 to be activated area and the inner area 52 of the touch screen to be inactivated area. In this case, when a user touches the outer area 51, the controller 190 may perform the function related with the user interface on the touched area. Meanwhile, when a user touches the inner area 52, the controller 190 may not perform processing regarding the user input.

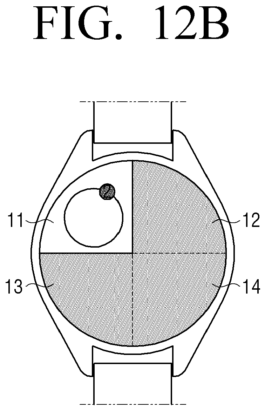

Further, referring to FIG. 12B, when the display 130 is divided into a plurality of areas corresponding to a plurality of groups according to an embodiment, the controller 190 may activate the touch panel corresponding to one area 11 among a plurality of areas, and inactivate the touch panel corresponding to the other areas 12 - 14.

In this case, when a user input is sensed through the touch panel corresponding to one area 11, the controller 190 may control the display 130 to display the notice information belonging to the group corresponding to one area 11 or the notice information list. Meanwhile, when a user touches the other areas 12 - 14, the controller 190 may not perform processing regarding the user input.

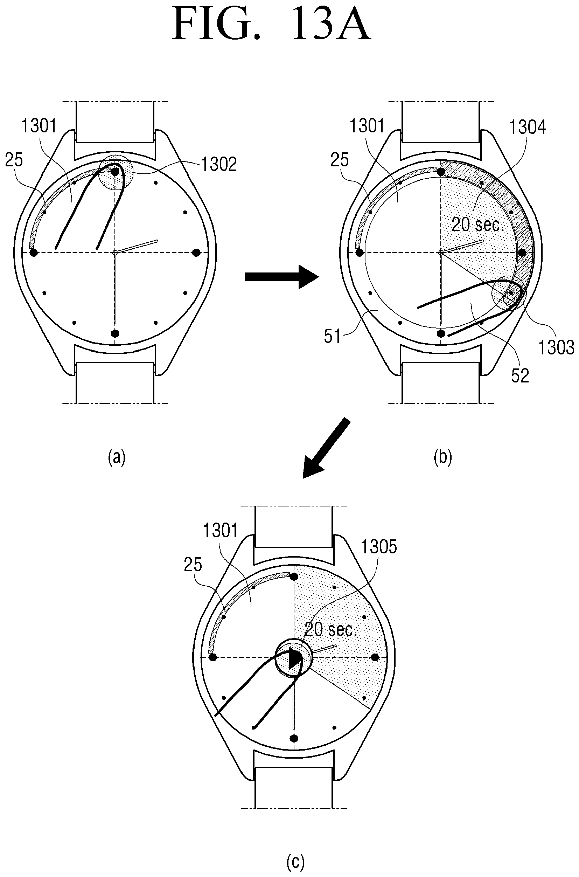

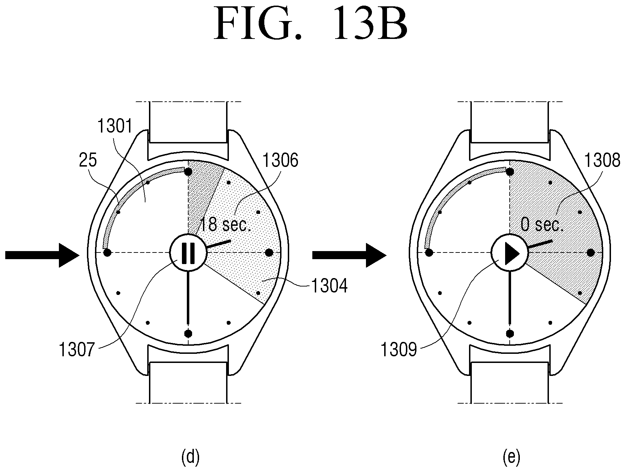

FIGS. 13A and 13B are diagrams illustrating the user interface screen in which the part of the touch screen is activated according to an embodiment.

Referring to (a) of FIG. 13A, the controller 190 may control the display 130 to display the watch screen 1301.

The watch screen 1301 may include the hour and minute hands indicating the current time. Further, when the watch screen 1301 is divided into a plurality of areas corresponding to the groups to which a plurality of notice information belong, the controller 190 may control the display 130 to display the group notice information 25 on the area corresponding to the group to which the notice information belong. In this case, when a user input of selecting the group notice information 25 is sensed, the controller 190 may control the display 130 to display the notice information included in the group. Further, when a touch-drag input is sensed on the watch screen 1301, the controller 190 may control the display 130 to display the notice information recently received or the list of the applications that can be provided by the electronic device 10.

Referring to (a) of FIG. 13A again, the sensor 180 may sense a user input of touching one area 1302 (e.g., outer area directed toward the twelve hours) on the touch screen.

When a user input is sensed, the controller 190 may perform a timer setting function, as illustrated in (b) of FIG. 13A. When the timer setting function is performed, the controller 190 may control the outer area 51 of the watch screen 1301 to be activated area and the inner area 52 of the watch screen 1301 to be inactivated area, as described above in FIG. 12. Next, the sensor 180 may sense a user input of drawing and dragging an arc along the outer area 51 starting from one area 1302. In this case, the inner area 52 may be inactivated area. Thus, when a user input is performed away from the outer area and dragged on the inner side, the controller 190 may not sense the dragged user input on the inner side or may not perform processing regarding the user input. The sensor 180 may sense a user input of dragging toward another area 1303 (e.g., the outer area directed toward the four hours). According to the user input, the controller 190 may control the display 130 to display the fan shaped area 1304 corresponding to the dragged size to be highlighted. Next, the sensor 180 may sense a user input of discontinuing the touch.

When a user input is sensed, the controller 190 may set the timer based on the dragged size, as illustrated in (c) of FIG. 13A. For example, by assuming that the size of the dragging by 360° along the whole outer area of the watch screen 1301 is 60 seconds, the timer corresponding to the size of the dragging by 120° toward the four hours may be 20 seconds. Next, the sensor 180 may sense a user input of selecting UI element 1305 for starting the timer.

When a user input is sensed, the controller 190 may start the timer based on the time corresponding to the dragging size, as illustrated in (d) of FIG. 13B. Herein, the controller 190 may control the display 130 to display the animation effects on the watch screen 1301 proportionally to the executed time of the timer. For example, the size of the fan shaped area 1304 may be reduced proportionally to the executed time of the timer. Further, the color of the part in the fan shaped area 1304 may be modified proportionally to the executed time of the timer. Further, the controller 190 may control the display 130 to display the remained time 1306 on the watch screen 1301. In this case, when a user input of selecting UI element 1307 for the short pausing is sensed, the controller 190 may pause the executed of the timer for a moment.

When the time of the timer completes, the controller 190 may control the display 130 to display the time 1308 indicating the timer completing time, as illustrated in (e) of FIG. 13B. In this case, when a user input of selecting UI element 1309 for the restarting the timer is sensed, the controller 190 may start the timer again.

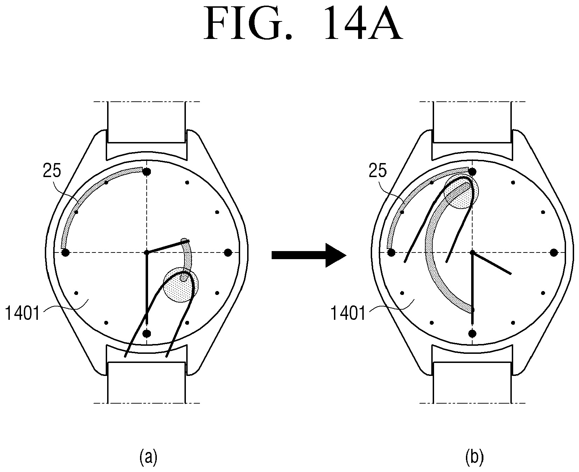

FIGS. 14A to 14E are diagrams illustrating the user interface screen to register the schedule through the watch screen according to an embodiment.

Referring to (a) of FIG. 14A, the watch screen 1401 may include the hour and minute hands indicating the current time. Further, while the watch screen 1401 is divided into a plurality of areas corresponding to the groups to which a plurality of notice information belong, the controller 190 may control the display 130 to display the group notice information 25 on the area corresponding to a group to which the notice information belong.

In (a) of FIG. 14A, a user may register the schedule. First, a user may register the time when the schedule starts. While the current time is displayed, the sensor 180 may sense a user input of discontinuing the touch on a certain area by touching and dragging the hour hand. In this case, the animation to move the hour hand with the moving of the touch position according to the dragging may be displayed.

When a user input is sensed, the controller 190 may control the display 130 to move and display the hour hand on the area where the touch is lifted off, as illustrated (b) of FIG. 14A. Next, the sensor 180 may sense a user input of discontinuing the dragging on a certain area by touching and dragging the minute hand. In this case, the animation to move the minute hand with the moving of the touch position according to the dragging may be displayed.

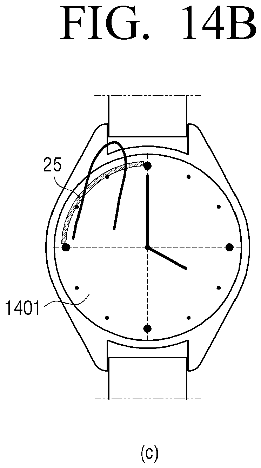

When a user input is sensed, the controller 190 may control the display 130 to move and display the minute hand on the area where the touch is lifted off, as illustrated in (c) of FIG. 14B. Next, the sensor 180 may sense a user input of discontinuing the touch.

When a user input is sensed, the controller 190 may control the display 130 to display a pop up 1402 to request the completing time of the schedule, as illustrated in (d) of FIG. 14B. Next, a user input may not be sensed for a certain time (e.g., one second).

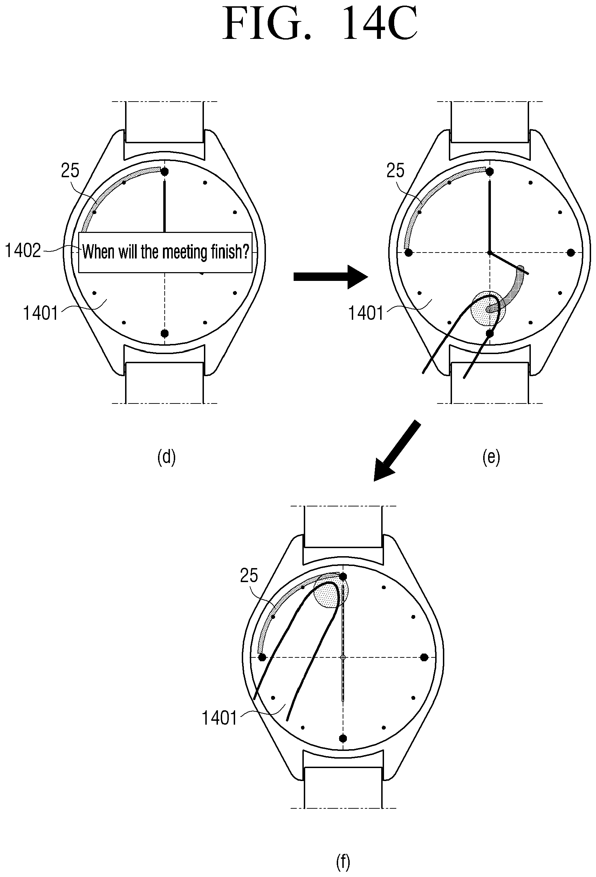

In this case, a user may register the completing time of the schedule, as illustrated in (e) of FIG. 14C. While the starting time of the schedule is displayed, the sensor 180 may sense a user input of discontinuing the touch on a certain area by selecting and dragging the hour minute. In this case, the animation to move the hour minute with the moving of the touch position according to the dragging may be displayed.

When a user input is sensed, the controller 190 may control the display 130 to move and display the hour hand on the area where the touch is lifted off, as illustrated in (f) of FIG. 14C. Next, the sensor 180 may sense a user input of discontinuing the touch after touching the minute hand. This operation may refer to that a user may not request the moving of the minute hand. If a user wants to move the minute hand, the sensor 180 may sense a user input of discontinuing the dragging on a certain area by touching and dragging the minute hand.

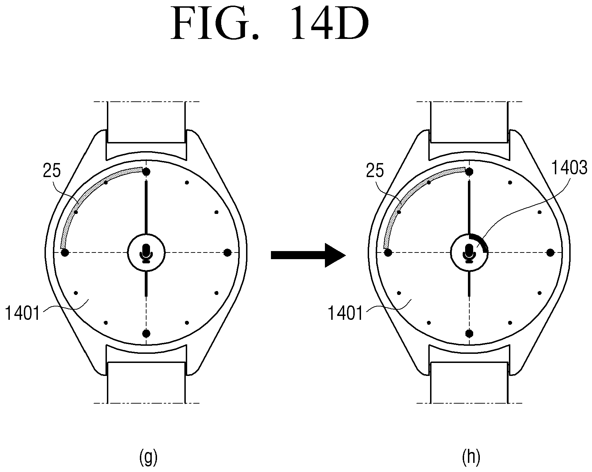

When a user input is sensed, the controller 190 may recognize a user voice related with the schedule descriptions through the microphone (not illustrated), as illustrated in (g) of FIG. 14D. While the user voice is recognized, the controller 190 may control the display 130 to display the graphic 1403 indicating the time when the voice can be recognized, as illustrated in (h) of FIG. 14D.

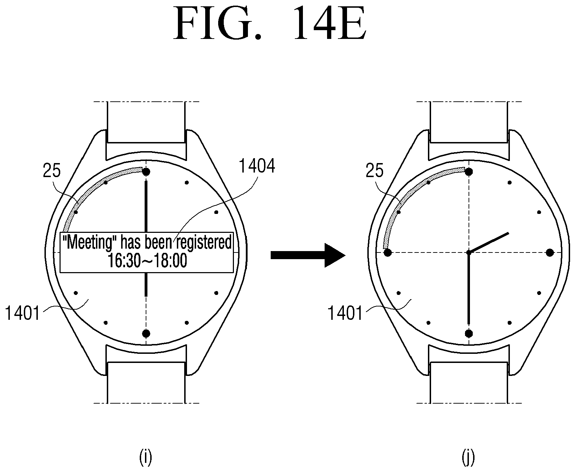

When the time to recognize the voice passes over, the controller 190 may control the display 130 to display the pop up 1404 informing that the schedule is registered, as illustrated in (i) of FIG. 14E. Herein, the controller 190 may control the display 130 to display the animation indicating the starting time and the completing time of the schedule.

Next, when a certain time (e.g., one second) passes over, the controller 190 may control the display 130 to display the current time again, as illustrated in (j) of FIG. 14E.

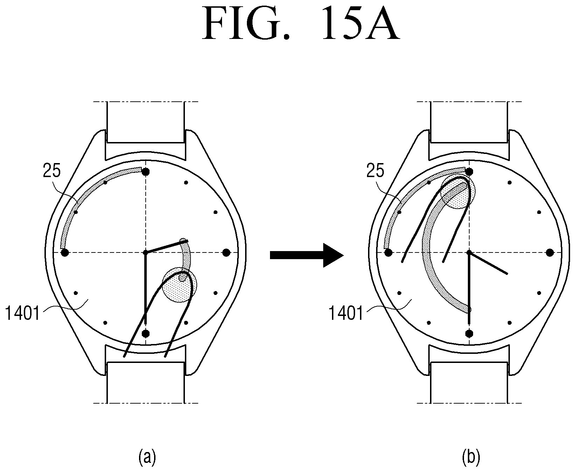

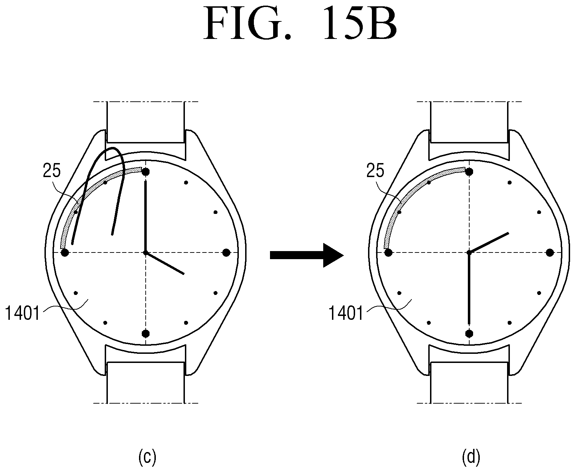

FIGS. 15A and 15B are diagrams illustrating the user interface screen canceling the schedule registration through the watch screen according to an embodiment.

Because (a) and (b) of FIG. 15A correspond to (a) and (b) of FIG. 14A, the relevant explanation is not provided herein.

Referring to (c) of FIG. 15B, the controller 190 may control the display 130 to move and display the hour hand on the area where the touch is lifted off. Next, a user input may not be sensed for a certain time (e.g., three seconds).

In this case, a user may cancel the schedule registration, as illustrated in (d) of FIG. 15B. In this case, the controller 190 may control the display 130 to display the animation indicating the cancel of the schedule registration. For example, the animation to return the hour and minute hands from the starting time of the cancelled schedule to the current time may be displayed.

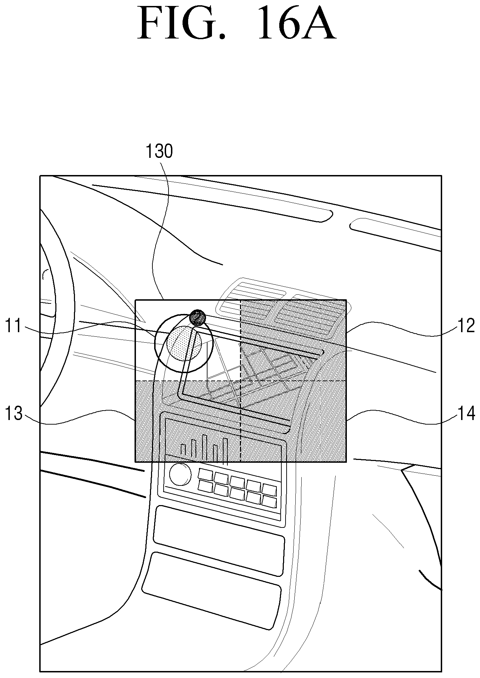

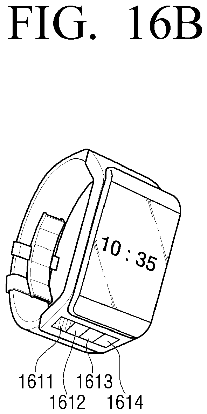

FIGS. 16A and 16B are diagrams illustrating various devices displaying the notice information according to an embodiment.

Referring to FIG. 16A, the display 130 may be installed at a driver seat of a car.

In the example mentioned above, the display 130 may be divided into a plurality of areas 11 - 14 respectively corresponding to a plurality of notice information, as described above. Thus, the display 130 may be divided into a plurality of areas 11 - 14 corresponding to a plurality of groups.

Herein, a car may sense the event related with the notice information, or receive the event related with the notice information from the electronic device 10. In this case, a car may activate the pixels included in the area 11 corresponding to the notice information. Further, a car may inactivate the pixels included in the areas 12 - 14 not corresponding to the notice information. Next, a car may control the display 130 to display the group notice information 21 of a group to which the notice information belong, on the area 11 where the pixels are activated.

Further, as illustrated in FIG. 16B, a strap of the smart watch may be equipped with a plurality of light emitters 1611 - 1614 (e.g., LED).

A plurality of light emitters 1611 - 1614 may be positioned adjacent to each other, or spaced away with each other by having a certain interval. Further, a plurality of light emitters 1611 - 1614 may emit different colors to each other. Further, a plurality of light emitters 1611 - 1614 may emit the light on the different frequencies to each other.

A plurality of light emitters 1611 - 1614 may correspond to a plurality of areas 11 - 14 corresponding to a plurality of groups according to an embodiment. Thus, the first light emitter 1611 may correspond to the first area 11, the second light emitter 1612 may correspond to the second area 12, the third light emitter 1613 may correspond to the third area 13, and the fourth light emitter 1614 may correspond to the fourth area 14.

Herein, when the smart watch senses the event related with the notice information belonging to one group among a plurality of groups, the smart watch may control the display 130 for the light emitter corresponding to the one group to emit the light. For example, the smart watch may emit the light emitter corresponding to one group with the first color, and may not emit the light emitters corresponding to the other groups. Further, the smart watch may emit the light emitter corresponding to the one group with the first frequency, and may not emit the light emitters corresponding to the other groups. Otherwise, the smart watch may emit the light emitters corresponding to the other groups with the second frequency different from the first frequency.

Meanwhile, although not illustrated, the electronic device 10 may have various forms of feedbacks respectively regarding a plurality of groups. For example, the electronic device 10 may provide different haptic feedbacks to each other respectively regarding a plurality of groups to which the notice information belong, when the event related with the notice information is sensed. Further, the electronic device 10 may provide different audio effects to each other respectively regarding a plurality of groups to which the notice information belong, when the event related with the notice information is sensed.

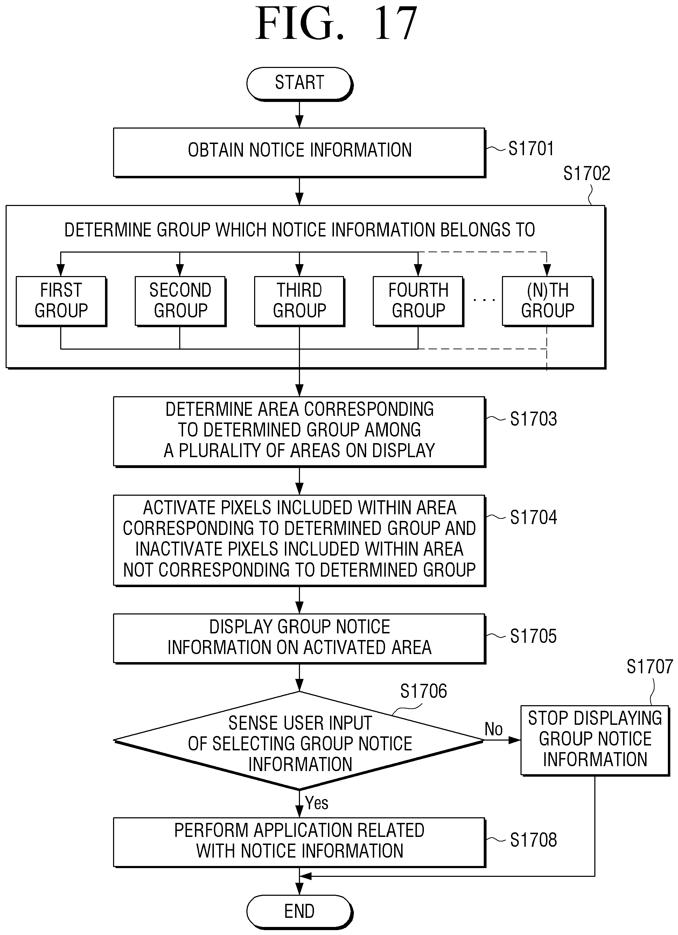

FIG. 17 is a flowchart explaining a method for displaying the notice information according to an embodiment.

Referring to FIG. 17, the electronic device 10 may obtain the notice information at S1701.

At S1702, the electronic device 10 may determine a group to which the obtained notice information will belong. For example, the electronic device 10 may determine a group to which the notice information will belong, based on the type of the notice information. The first to the Nth group may be various groups representing the notice information. The examples regarding the groups are already described above, which may not be further explained below.

When a group to which the notice information belong is determined, the electronic device 10 may determine the pixel area corresponding to the group to which the notice information belong, on the display 130 at S1703. Further, the electronic device 10 may determine the area of the touch panel corresponding to the determined pixel area.

At S1704, the electronic device 10 may activate the determined pixel area and the area of the touch panel corresponding to the determined pixel area. In this case, the electronic device 10 may not activate the pixel areas corresponding to the groups to which the notice information do not belong, on the display 130. Further, the areas of the touch panel corresponding to the inactivated pixel areas may be also inactivated.

At S1705, the electronic device 10 may display the group notice information on the activated pixel area.

At S1706, the electronic device 10 may determine whether a user input of selecting the group notice information is sensed or not.

When a user input is sensed at S1706-Y, the electronic device 10 may display the notice information at S1708. For example, the electronic device 10 may implement the application related with the notice information, and display the notice information on the application implementing screen.

Meanwhile, when a certain time (e.g., three seconds) passes over without sensing a user input at S1706-N, the electronic device 10 may stop the displaying the group notice information at S1707. Herein, the notice information may disappear with the fade-off effects.

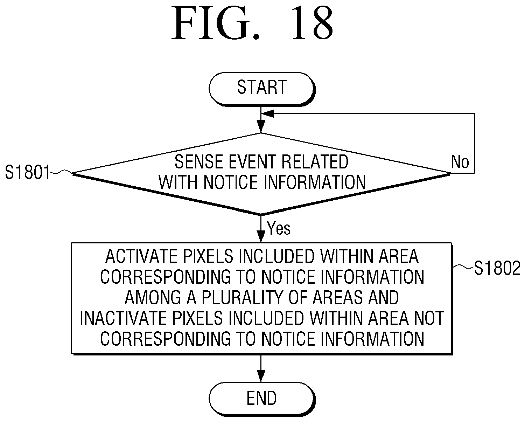

FIG. 18 is a flowchart explaining the method for displaying the notice information according to an embodiment.

Referring to FIG. 18, the electronic device 10 may determine whether the event related with the notice information is sensed or not at S1801.

When the event is sensed at S1801-Y, the electronic device 10 may activate pixels included in the area corresponding to the notice information among a plurality of areas 11 - 14, and inactivate pixels included in the areas not corresponding to the notice information.

Herein, the area corresponding to the notice information may be area corresponding to a group to which the notice information belong.

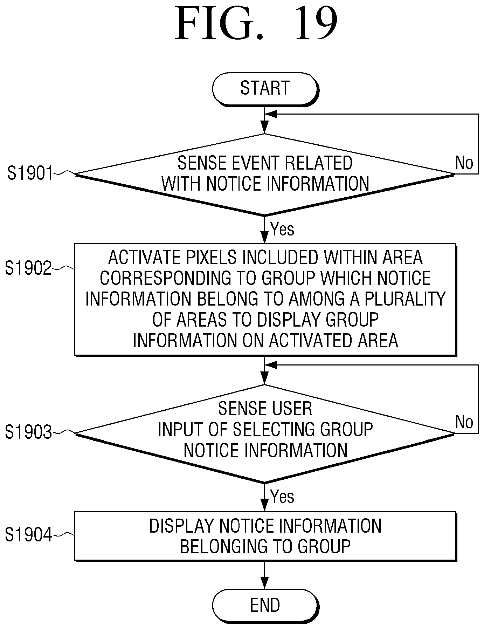

FIG. 19 is a flowchart provided to explain a method for displaying notice information according to another embodiment.

Referring to FIG. 19, the electronic device 10 may determine whether the event related with the notice information is sensed or not at S1901.

When the event is sensed at S1901-Y, the electronic device 10 may activate pixels included in the area corresponding to a group to which the notice information belong, among a plurality of notice areas 11 - 14, and display the group notice information on the activated area, at S1902. Herein, the electronic device 10 may inactivate pixels included in the areas corresponding to groups to which the notice information do not belong, among a plurality of notice areas 11 - 14.

At S1903, the electronic device 10 may determine whether a user input of selecting the group notice information is sensed or not.

When a user input is sensed at S1903-Y, the electronic device 10 may display the notice information belonging to the group on the area where the pixels are activated. Further, the electronic device 10 may display the notice information list belonging to the group on the area where the pixels are activated.

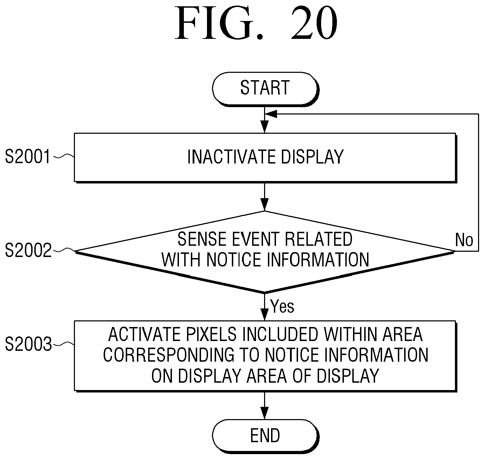

FIG. 20 is a flowchart provided to explain a method for displaying the notice information according to another embodiment.

Referring to FIG. 20, the display 130 of the electronic device 10 may be inactivated at S2001. Herein, the inactivated display 130 may include the black screen state of the display 130, the off state of the display panel in the display 130, or the state displaying non information on the display 130. Further, the inactivated display 130 may include the off state of the electronic device 10.

While the display 130 is inactivated, the electronic device 10 may determine whether or not the event related with the notice information is sensed, at S2002.

When the event is sensed at S2002-Y, the electronic device 10 may activate pixels included in the area corresponding to the notice information on the display area of the display 130, at S2003. Herein, the area corresponding to the notice information may be part of the display area. The electronic device 10 may display the group notice information on the pixel activated area. Further, the electronic device 10 may display the notice information on the pixel activated area. The electronic device 10 may inactivate pixels included in the areas not corresponding to the notice information on the display area.

Meanwhile, although the above embodiments describe that the notice information is directly provided to the electronic device 10, this is merely one of embodiments. The notice information may be provided to the electronic device 10 through another external electronic device.

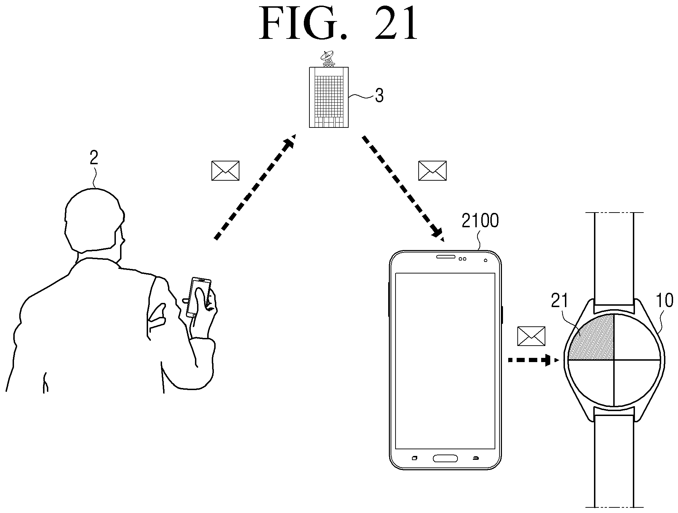

FIG. 21 is a diagram illustrating that the notice information provided through the external electronic device 2100 according to another embodiment. Meanwhile, according to an embodiment, the electronic device 10 may be wearable device such as smart watch, and the external electronic device 2100 may be mobile device such as smart phone or tablet device.

Referring to FIG. 21, when another user 2 transmits a message to the user 1, the message may be transmitted to the external electronic device 2100 through the station 3. In this case, the external electronic device 2100 may transmit the event information indicating the arrival of the message to the connected electronic device 10. In response to the received event, the electronic device 10 may determine the area corresponding to a group to which the message belongs among a plurality of areas. Further, the electronic device 10 may activate pixels included in the determined area, and display the group notice information 21 of the group to which the message belongs on the determined area in order to display the arrival of the message.

As described above, the user may confirm whether the event occurs and the event type more quickly by transmitting the event occurring information from the mobile device such as smart phone to the wearable device such as smart watch. Thereafter, when the user selects the group notice information, the user may be provided with the notice information through the electronic device 10 or the external electronic device 2100.

Further, the above embodiments describe that the mapping information is stored in the electronic device 10, this is merely one of embodiments. The mapping information may be shared with the external device by registering the mapping information on the server.

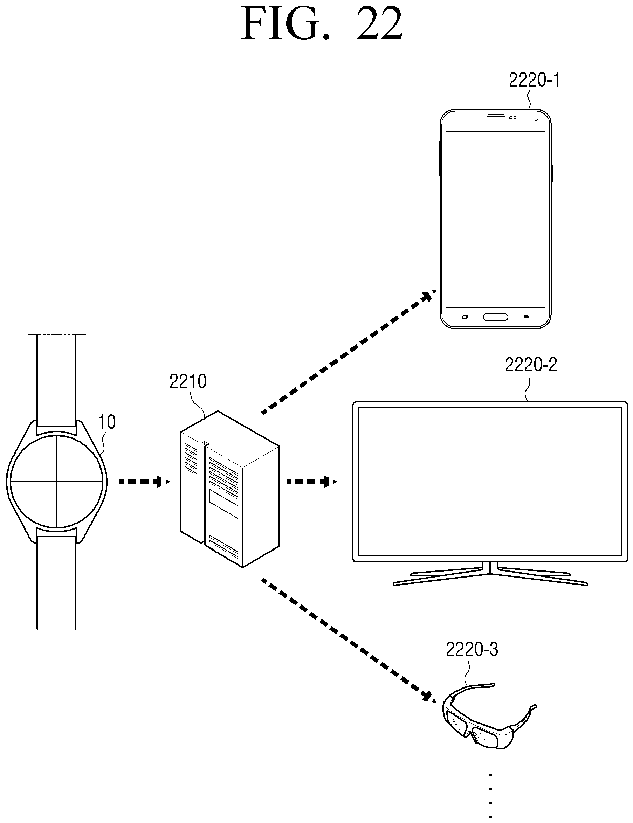

FIG. 22 is a diagram illustrating that the mapping information is stored on the server 2210 and provided to the other external devices according to another embodiment.

Referring to FIG. 22, the electronic device 10 may store the mapping information in which a plurality of areas are mapped with a plurality of groups to which the notice information belong, on the memory 150. Herein, the mapping information between a plurality of areas and a plurality of groups may be designated through the user interface. Further, the electronic device 10 may transmit the mapping information to the server 2210. The server 2210 may store the transmitted mapping information. Further, the server 2210 may transmit the stored mapping information to the other external devices 2220-1 to 2220-3 according to the requests of the other external devices 2220-1 to 2220-3. Herein, the external devices 2220-1 to 2220-3 may include the display apparatus such as wide screen of TV and the wearable device such as smart glasses in addition to the electronic device such as smart phone.

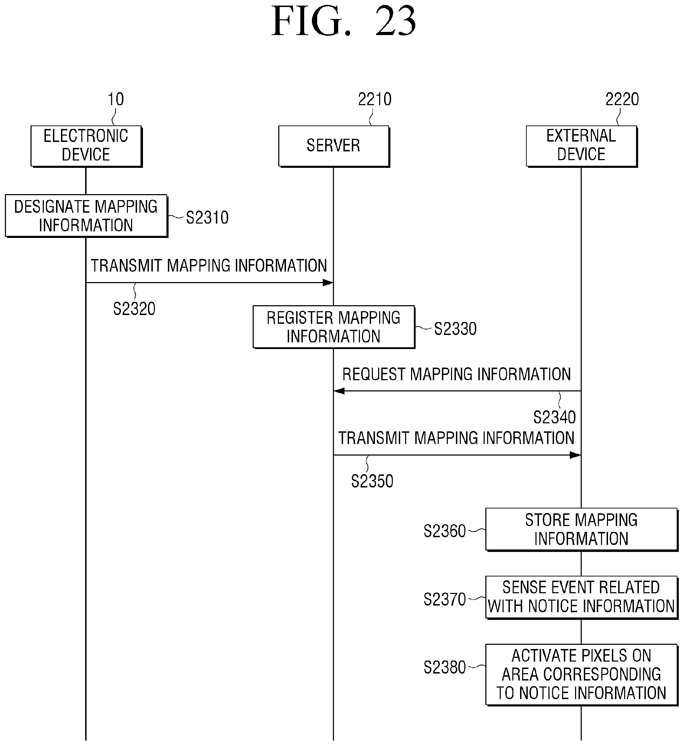

FIG. 23 is a sequence diagram explaining that the mapping information is stored on the server 2210 and provided to the other external devices according to another embodiment.

At S2310, the electronic device 10 may store the mapping information. Herein, the mapping information may be designated according to the user input received through the user interface.

At S2320, the electronic device 10 may transmit the designated mapping information to the server 2210. Herein, the mapping information may include the user information of the electronic device 10 (e.g., ID information).

At S2330, the server 2210 may register the received mapping information. Herein, the server 2210 may store the mapping information and the user information together.

At S2340, the external device 2220 may request the mapping information. Herein, the request may include the user information of the external device 2220.

At S2350, the server 2210 may transmit the mapping information to the external device 2220 in response to the request. Specifically, the server 2210 may determine whether there is mapping information registered by a user identified to be a user of the external device 2220 based on the user information included in the request. When there is mapping information registered by a user identified to be a user of the external device 2220, the server 2210 may transmit the registered mapping information to the external device 2220.

At S2360, the external device 2220 may store the received mapping information.

At S2370, the external device 2220 may sense the event related with the notice information.

At S2380, the external device 2220 may activate pixels on the area corresponding to the notice information in response to the sensing of the event. Herein, the external device 2220 may inactivate pixels included in the areas corresponding to the groups to which the notice information do not belong.

As described above, a user may share the designated mapping information with another external device by registering the mapping information on the server 2210 and sharing with the other external device 2220. Thus, the uniform user experiences can be provided through a plurality of devices.

Further, although the above embodiments describe that the screen is divided into a specific number of the areas regardless of a number of the group notice information, this is merely one of embodiments. According to a number of the group notice information, the screen may be adaptively divided to display the notice information.

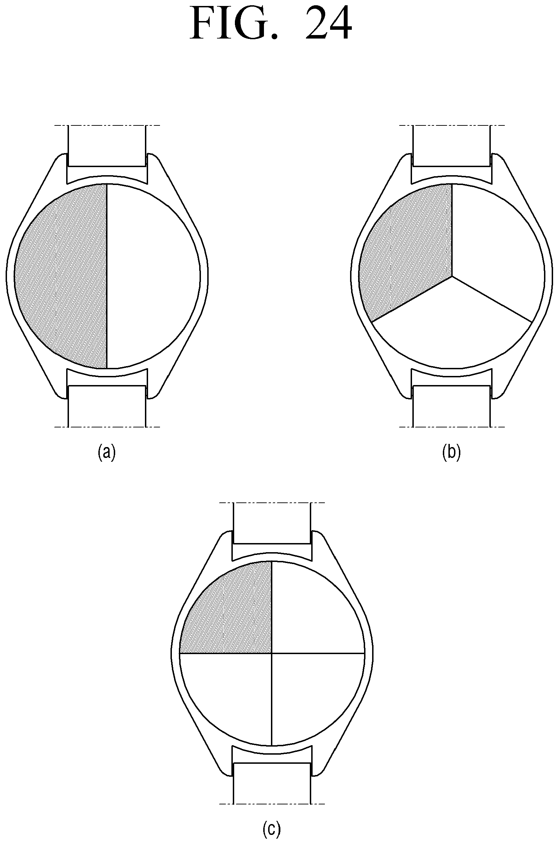

FIG. 24 is a diagram provided to explain that the screen is divided according to a number of the group notice information.

Specifically, when the electronic device 10 is smart watch including the circular shape of the display 130, and when two group notice information are designated through the environment setting, the electronic device 10 may divide the display 130 into two areas, and map the group notice information respectively on the two areas, as illustrated in (a) of FIG. 24. Further, when three group notice information are designated, the electronic device 10 may divide the display 130 into three areas, and map the group notice information respectively on the three areas, as illustrated in (b) of FIG. 24. Further, when four group notice information are designated, the electronic device 10 may divide the display 130 into four areas, and map the group notice information respectively on the four areas, as illustrated in (c) of FIG. 24.

As described above, the display 130 may be adaptively divided according to a number of the designated group notice information. Thus, a user can confirm the number of the group notice information designated by him in addition to the types of the group notice information.

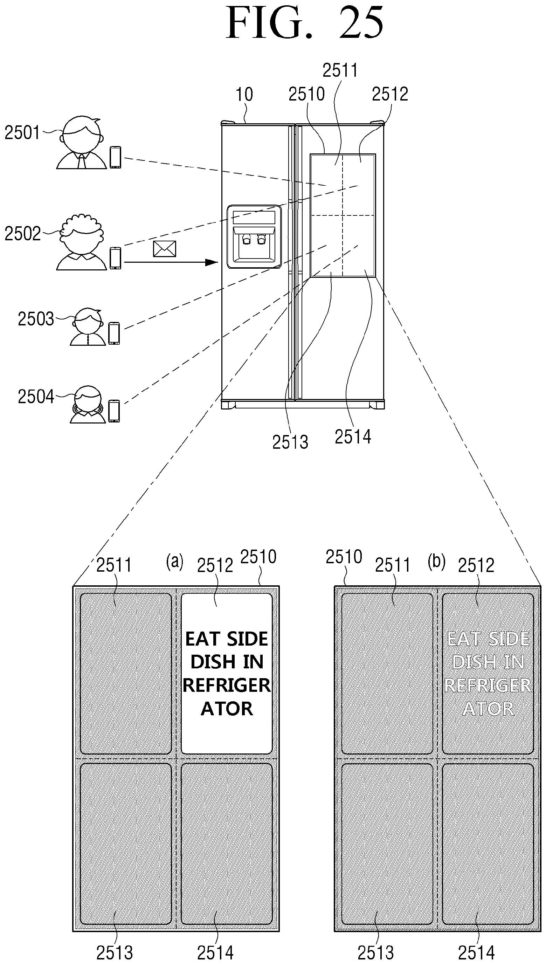

FIG. 25 are diagrams illustrating situation in which notice information is provided to the electronic device 10, according to another embodiment. In FIG. 25, the electronic device 10 may, for example, be a food storage device (e.g., refrigerator).

In FIG. 25, each of a plurality of areas 2511, 2512, 2513 and 2514 of the display 2510 may correspond to a plurality of sources 2501, 2502, 2503 and 2504 that can provide notice information, respectively. In this case, the source may include an apparatus owned by a third party or a server external to the electronic device 10.

In this case, the notificiation information received from one source 2502 among the plurality of sources 2501, 2502, 2503 and 2504 may be displayed through an area 2512 corresponding to the source 2502 of the display 2510.

Specifically, the notice information sent from the source 2502 of FIG. 25 may be received by the electronic device 10.

In this case, the electronic device 10 may sense an event that indicates that notice information is received from the source 2502. In response to the sensed event, the electronic device 10 may determine an area 2512 corresponding to the notice information from among the plurality of areas 2511, 2512, 2513 and 2514 of the display 2510.

When the area 2512 corresponding to the notice information is determined, the electronic device 10 may activate pixels included in the area 2512 corresponding to the notice information, and inactivate pixels included in the areas 2511, 2513 and 2514 that do not correspond to the notice information.

For example, as illustrated in (a) of FIG. 25, the electronic device 10 may activate pixels included in the area 2512 corresponding to the notice information, and display the notice information using a portion of the activated pixel area. For example, when the source 2502 is an apparatus owned by parents of the user, the notice information displayed in the activated pixel area may be a message such as "Eat a side dish in the refrigerator".

As another example, as illustrated in (b) of FIG. 25, when the notice information is text, the electronic device 10 may activate only pixels corresponding to the text from among the area 2512 corresponding to the notice information, and inactivate the other pixels of the areas 2511, 2513 and 2514 that do not correspond to the notice information and the remaining pixels of the area 2512.

According to the various embodiments, a display attribute of the notice information may vary according to sources. For example, the respective notice information according to the respective sources may be in different colors, fonts or shades and displayed.

Thus, the user may intuitively recognize the source that sent notice information based on the respective areas where notice information is displayed.

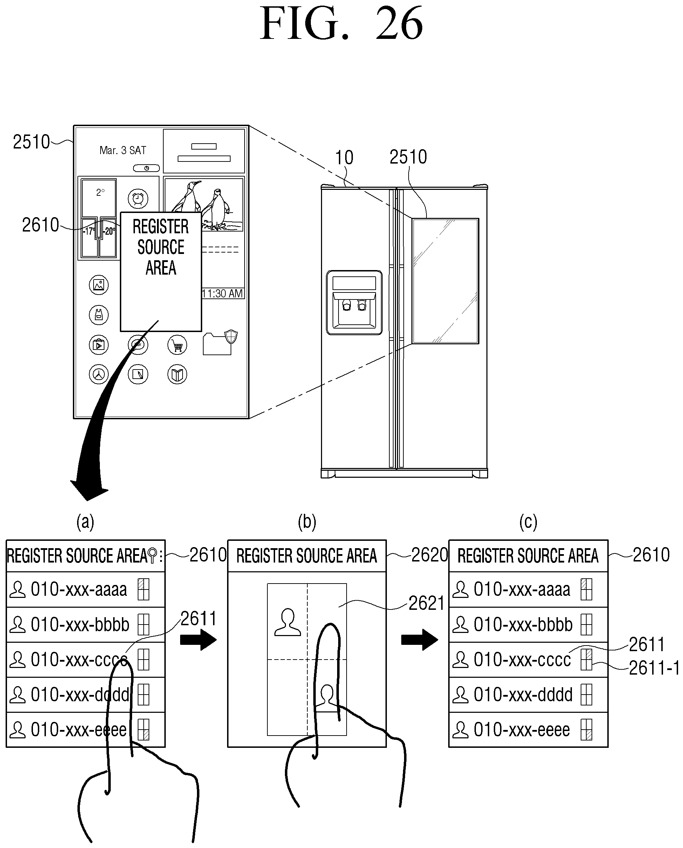

FIG. 26 are diagrams illustrating process of mapping sources that send notice information with areas of the display 2510 in the electronic device 10.

In (a) of FIG. 26, the electronic device (10) may display a user interface (UI) screen 2610 that includes a plurality of sources that may be mapped to areas provided by the display 2510. In this case, the user may select one source 2611 from among the plurality of sources.

When the source 2611 is selected, as illustrated in (b) of FIG. 26, the electronic device (10) may include a UI screen 2620 that includes a plurality of areas provided by the display 2510. In this case, when another sources is already mapped with one of the plurality of areas included in the UI screen 2620, an area with which another source is mapped may already display identification information of the another source.

When the UI screen 2620 is displayed, the user may select an area 2621 to be mapped with one source 2611 from among the plurality of areas.

When the area 2621 is selected, as illustrated in (c) of FIG. 26, the electronic device (10) may display a UI screen 2610 that includes graphics 2611-1 confirming that the area 2621 is mapped to the source 2611.

Accordingly, in a state that the source 2611 is mapped with the area 2621 of the display 2510, when notice information is received from the source 2611, the electronic device 10 may display the received notice information on the area 2621 of the display 2510 to which the source 2611 is mapped.

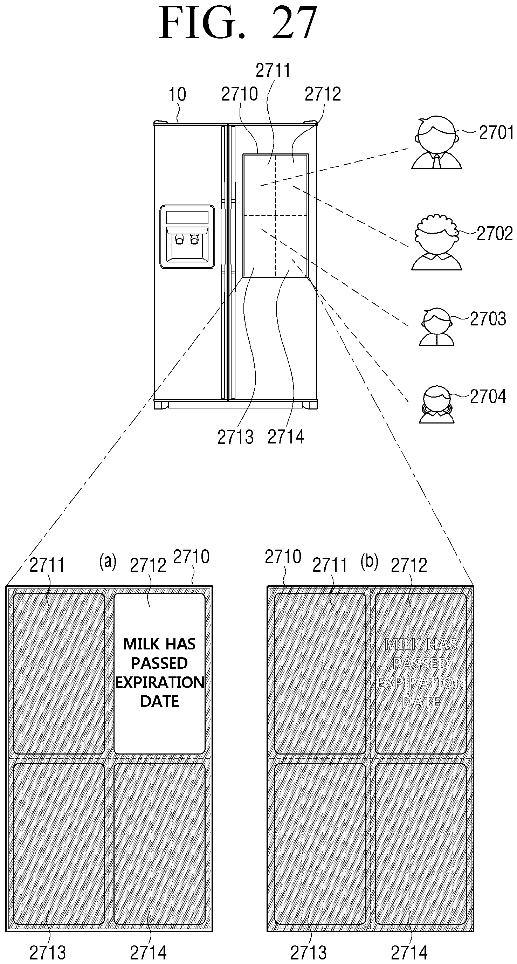

FIG. 27 is a diagram illustrating situation in which notice information is provided to the electronic device 10, according to another embodiment.

In FIG. 27, each of a plurality of areas 2711, 2712, 2713 and 2714 of the display 2710 may correspond to a plurality of destinations 2701, 2702, 2703 and 2704 being provided with notice information, respectively.

In this case, notice information received from a destination 2702 from among the plurality of destinations 2701, 2702, 2703 and 2704 may be displayed through an area 2712 of the display 2710 that corresponds to the destination 2702.

Specifically, in FIG. 27, the notice information sent to the destination 2702 may be sent from an external device to the electronic device 10. In this case, the external device may include an apparatus owned by an external third party or a server external to the electronic device 10.

Alternatively, the notice information notified to a destination may be generated by the electronic device 10 itself.

For example, the electronic device 10 may generate notice information that notifies the destination 2702 of a state of food being stored. For example, when food being stored passes the expiry date or when an amount of food being stored exceeds a certain scope, the electronic device 10 may generate notice information that shows a food storage state.

As another example, when an error occurs while the electronic device 10 is operated, the electronic device 10 may generate notice information that notifies the destination of an error state of the electronic device 10. For example, when a temperature of a storage in which the food is kept exceeds a predetermined scope and is high or low, the electronic device 10 may generate notice information that shows that a temperature of the storage is abnormal.

In this case, the electronic device 10 may sense an event indicating that the notice information is received or generated. In response to the sensed event, the electronic device 10 may determine an area 2712 corresponding to the notice information from among the plurality of areas 2711, 2712, 2713 and 2714. Here, the area 2712 corresponding to the notice information is an area in which the notice information is to be displayed, and may be an area corresponding to the destination to receive the notice information.

When the area 2712 corresponding to the notice information is determined, the electronic device 10 may activate pixels included in the area 2712 corresponding to the notice information, and inactivate pixels included in the areas 2711, 2713 and 2714 that do not correspond to the notice information.

For example, as illustrated in (a) of FIG. 27, the electronic device 10 may activate pixels included in the area 2712 corresponding to the notice information, and display notice information by using a portion of the activated pixel area. For example, when a destination to receive the notice information is parents of the user who mainly manage food, the notice information displayed in the activated pixel area may be a message such as "The milk has passed the expiration date".

As another example, as illustrated in (b) of FIG. 27, when the notice information is text, the electronic device 10 may activate only pixels corresponding to the text from among the area 2712 corresponding to the notice information, and inactivate the areas 2711, 2713 and 2714 that do not correspond to the notice information and other pixels of the area 2712.

According to various embodiments, a display attribute of the notice information may vary for each destination. For example, the respective notice information according to the respective destinations may have different colors, fonts and shades and be displayed.

Accordingly, the user of the electronic device 10 may intuitively recognize notice information provided to him or her based on notice information displayed through the respective areas.

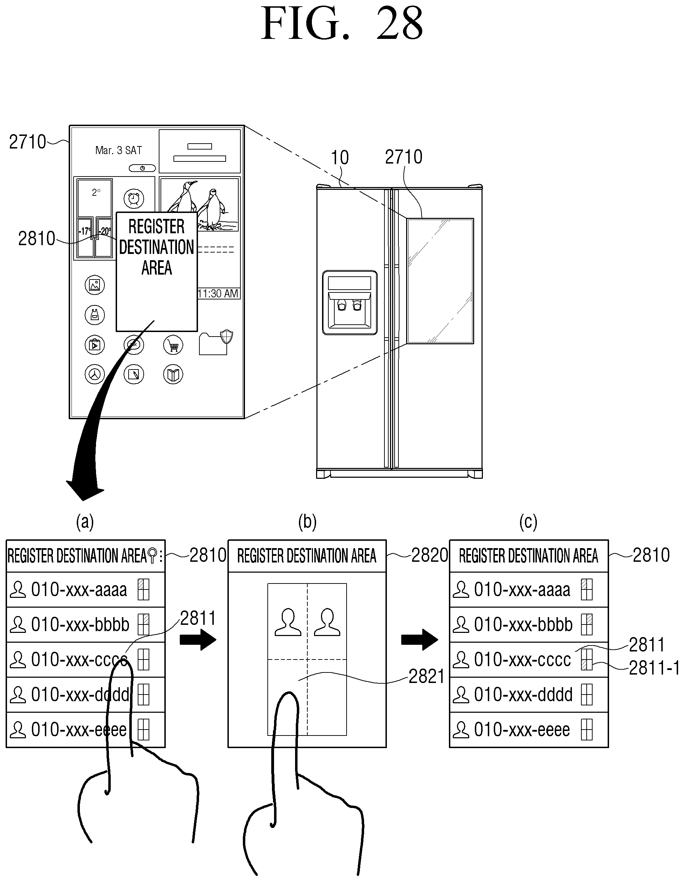

FIG. 28 are diagrams illustrating processes of mapping a destination that receives notice information with areas of the display 2510, according to another embodiment.

In (a) of FIG. 28, the electronic device 10 may display a user interface (UI) screen 2810 that includes a plurality of destinations that can be mapped with areas provided by the display 2510. In this case, the user may select a destination 2811 from among the plurality of destinations.

When the destination 2811 is selected, as illustrated in (b) of FIG. 28, the electronic device 10 may include a UI screen 2820 that includes a plurality of areas provided by the display 2710. In this case, when another destination is already mapped with an area among the plurality of areas included in the UI screen 2820, identification information of the another destination may be pre-displayed in the area mapped to which the destination is mapped.

When the UI screen 2820 is displayed, the user may select an area 2821 to be mapped to the destination 2811 from among a plurality of areas.

When the area 2821 is selected, as illustrated in (c) of FIG. 26, the electronic device 10 may display a UI screen 2810 that includes graphics 2811-1 that shows that the area 2821 is mapped to the source 2811.

Accordingly, in a state that the destination 2811 is mapped to the area 2821 of the display 2810, when notice information notifying the destination 2811 is received, the electronic device 10 may display notice information received by the area 2821 of the display unit 2710 mapped to the destination 2811.

The devices (e.g., modules or electronic device 10) or the methods (e.g., operations) according to the various embodiments may be performed by at least one computer (e.g., processor 190) which implements the instructions included in at least one program among programs maintained by computer readable recording medium that can be read by the computer.

When the above instructions are performed by at least one computer (e.g., processor 190), the computer may perform the functions corresponding to the above instructions. Herein, the computer readable recording medium may be memory 150 for example.

The programs may be included in the computer readable recording medium such as hard disc, floppy disc, magnetic media (e.g., magnetic tape), optical media (e.g., compact disc read only memory (CD-ROM)), DVD (digital versatile disc), magneto-optical media (e.g., floptical disc), and hardware devices (e.g., ROM, RAM, or flash memory). In this case, the computer readable recording medium may be included in the constitution of the electronic device 10. However, it can be equipped through the port of the electronic device 10, or included in the external devices (e.g., cloud, server, or other electronic devices) operating on outside the electronic device 10. Further, the programs may be distributed and stored in a plurality of recording media. Herein, at least part among a plurality of recording media may be positioned on the external device of the electronic device 10.

The instructions may include high language codes that can be implemented in a computer by using the interpreter as well as mechanical codes generated by the compiler. The above described hardware devices may be constructed to operate to be more than one software module in order to perform the operations of the various embodiments, and vice versa.

Further, the foregoing exemplary embodiments and advantages are merely exemplary and are not to be construed as limiting the exemplary embodiments. The present teaching can be readily applied to other types of apparatuses. Also, the description of the exemplary embodiments of the present inventive concept is intended to be illustrative, and not to limit the scope of the claims.

## Claims

1. An electronic device configured to provide notice information, comprising:
a display divided into a plurality of areas respectively corresponding to a plurality of notice information; and
a controller configured to control the display to activate pixels included in an area corresponding to the notice information among the plurality of areas, and inactivate pixels included in an area not corresponding to the notice information, when the event related with the notice information is sensed.

2. The electronic device of claim 1, wherein the area corresponding to the notice information is an area corresponding to a group to which the notice information belong.

3. The electronic device of claim 1, wherein the display is divided into a plurality of areas corresponding to a plurality of groups to which the plurality of notice information respectively belong.

4. The electronic device of claim 1, wherein the notice information belongs to one group among a plurality of groups according to types of the notice information, and the types of the notice information are determined according to at least one among an application for processing the notice information, an importance of the notice information, a size of the notice information, a sender of the notice information, descriptions of the notice information, and a data type of the notice information.

5. The electronic device of claim 1, wherein the electronic device further comprises a memory configured to retain mapping information in which the plurality of areas are respectively mapped with the plurality of groups to which the plurality of notice information belong, and
the controller controls the display to activate pixels included in the area to which the notice information belong, among the plurality of areas, based on the mapping information.

6. The electronic device of claim 1, wherein the notice information is at least one among call reception information, text message information, e-mail message information, instant message information, social service information, alarm information, timer information, battery information and schedule information.

7. The electronic device of claim 1, wherein the controller controls the display to display group notice information of a group to which the notice information belongs, on the area where the pixels are activated.

8. The electronic device of claim 7, wherein the group notice information comprises at least one among a graphic representing the group, a number of the notice information belonging to the group, a number of the notice information un-read by a user and belonging to the group, a name of the group, an initial of the group, a nickname of the group, an image related with the group, and an animation related with the group.

9. The electronic device of claim 7, wherein the electronic device further comprises a sensor configured to sense a user input of selecting the group notice information, and
the controller controls the display to display the notice information belonging to the group in response to the user input.

10. The electronic device of claim 7, wherein the electronic device further comprises a sensor configured to sense a user input of selecting the group notice information, and
the controller controls the display to display a notice information list belonging to the group in response to the user input.

11. A method for providing notice information of an electronic device, comprising:
sensing an event related with notice information; and
activating pixels included in an area corresponding to the notice information among a plurality of areas divided from a display to respectively correspond to a plurality of notice information, and inactivating pixels included in an area not corresponding to the notice information in response to the sensed event.

12. The notice information providing method of claim 11, wherein the area corresponding to the notice information is an area corresponding to a group to which the notice information belongs.

13. The notice information providing method of claim 11, wherein the display is divided into a plurality of areas corresponding to a plurality of groups to which a plurality of notice information respectively belong.

14. The notice information providing method of claim 11, wherein the notice information belongs to one group among a plurality of groups according to types of the notice information, and the types of the notice information are determined according to at least one among an application for processing the notice information, an importance of the notice information, a size of the notice information, a sender of the notice information, descriptions of the notice information, and a data type of the notice information.

15. The notice information providing method of claim 11, wherein the method further comprises retaining mapping information in which the plurality of areas are respectively mapped with a plurality of groups to which the plurality of notice information respectively belong, on a memory, and
the activating the pixels included in the area corresponding to the notice information comprises activating pixels included in an area to which the notice information belong, among the plurality of areas, based on the mapping information.
